# EUROPEAN PATENT APPLICATION

(11) **EP 2 775 388 A2**
(43) Date of publication of application: **10.09.2014**
(21) Application number: 14157619.9
(22) Date of filing: 04.03.2014
(51) Int. Cl.: G06F 3/0488

(54) **Method and apparatus for manipulating data on electronic device display**

(30) Priority: 04.03.2013 KR 20130023044
(71) Applicant: Samsung Electronics Co., Ltd., Suwon-si Gyeonggi-do 443-742 (KR)
(72) Inventor: Seo, Jangseok, 443-742 Gyeonggi-do (KR); Park, Taegun, 443-742 Gyeonggi-do (KR); Hong, Myunggon, 443-742 Gyeonggi-do (KR)
(74) Representative: Nederlandsch Octrooibureau

(57) **Abstract**

A data processing method and apparatus of an electronic device for manipulating data presented on a page displayed on a display includes displaying the page for receiving a user input, forming an area on the page in response to the user input, and displaying data in the formed area.

## Description

### BACKGROUND OF THE INVENTION

### 1. Field of the Invention

The present invention relates generally to an electronic device and more particularly, to a data processing method and apparatus of an electronic device for manipulating data presented on a page displayed on a display.

### 2. Description of the Related Art

With the advance of digital technologies, various types of electronic devices capable of communicating and processing data have evolved into multifunctional devices integrating various functions with mobile convergence tendencies. For example, a recent electronic device integrates various functions including voice and video telephony, messaging including Short Message Service/Multimedia Message Service (SMS/MMS) and email, navigation, document editing (e.g. memo and word processor), picture-taking, broadcast playback, multimedia (video and audio) playback, Internet access, messenger, and Social Networking Service (SNS) functions.

Touchscreen-enabled electronic devices have recently overcome the limit of legacy input means and have facilitated user manipulation of the electronic devices. The recent touchscreen-based input manipulation growth has spawned development of various text input applications capable of editing data on a page of text edit applications. However, there is a need for more condensed client device steps, to reduce confusion and enhance user convenience in such electronic devices.

### SUMMARY OF THE INVENTION

The present invention has been made to address at least the above problems and/or disadvantages and to provide at least the advantages described below. Accordingly, an aspect of the present invention provides a content synchronization apparatus and method that is capable of reducing the client device operations by allowing a cloud server to perform the content synchronization function in the cloud service system.

In accordance with an aspect of the present invention, a data processing method of an electronic device includes displaying a page configured to receive a user input, forming an area on the page in response to the user input, and displaying data in the formed area.

In accordance with another aspect of the present invention, disclosed is a non-transitory computer-readable storage medium having recorded thereon a data processing method of an electronic device, the method comprising displaying a page for receiving a user input, forming an area on the page in response to the user input, and displaying data in the area when the area is formed.

### BRIEF DESCRIPTION OF THE DRAWINGS

The above and other aspects, features, and advantages of the present invention will be more apparent from the following detailed description when taken in conjunction with the accompanying drawings, in which:
FIG. 1 illustrates a mechanism for an electronic device to acquire data to be inserted in a page, according to an embodiment of the present invention;
FIG. 2 illustrates a configuration of the electronic device, according to an embodiment of the present invention;
FIGs. 3 to 9 illustrate screen displays for explaining inserting data into the onscreen page of the electronic device, according to an embodiment of the present invention;
FIGs. 10 to 12 illustrate screen displays for explaining retrieving and displaying data using an object on the onscreen page of the electronic device, according to an embodiment of the present invention;
FIGs. 13 to 18 illustrate screen displays for explaining inserting data shots by a camera module into an onscreen page of the electronic device, according to an embodiment of the present invention;
FIGs. 19 and 20 illustrate screen displays for explaining a document composition step using an application in an electronic device, according an embodiment of the present invention;
FIG. 21 illustrates a screen display for explaining adjusting an option (style) of a frame area formed on a document page of an application operating on the electronic device, according to an embodiment of the present invention;
FIGs. 22 and 23 illustrate screen displays for explaining moving a frame area on the onscreen page of the electronic device, according to an embodiment of the present invention;
FIGs 24 to 26 illustrate screen displays for explaining adjusting a frame area formed on the onscreen image of the electronic device, according to an embodiment of the present invention;
FIGs. 27 to 29 illustrate screen displays of the electronic device for explaining scrolling the data displayed in a frame area, according to an embodiment of the present invention;
FIGs. 30 to 34 illustrate screen displays for explaining forming a frame area on an onscreen page of the electronic device, according to an embodiment of the present invention;
FIG. 35 illustrates a data processing method using a part of the onscreen document page of an application operating on the electronic device, according to an embodiment of the present invention;
FIG. 36 illustrates a procedure of generating a frame area on the onscreen page of the electronic device in the data processing method, according to an embodiment of the present invention;
FIG. 37 illustrates a procedure of inserting the data into the onscreen page of a document application of the electronic device in the data processing method, according to an embodiment of the present invention;
FIG. 38 illustrates a data processing method using a frame area on the onscreen page of the electronic device, according to an embodiment of the present invention;
FIGs. 39 and 40 illustrate a procedure of displaying data in the frame area formed on the onscreen page of the electronic device in the data processing method, according to an embodiment of the present invention;
FIGs. 41 to 45 illustrate screen displays for explaining splitting a frame area formed on the ongoing page of the electronic device, according to an embodiment of the present invention;
FIG. 46 illustrates an screen display for explaining insertion of various data on the onscreen page of the electronic device in the data processing method, according to an embodiment of the present invention; and
FIGs. 47 to 49 illustrate screen displays for explaining inserting motion image data on the onscreen page of the electronic device, according to an embodiment of the present invention.

### DETAILED DESCRIPTION OF EMBODIMENTS OF THE INVENTION

Embodiments of the present invention are described with reference to the accompanying drawings in detail. The same reference numbers are used throughout the drawings to refer to the same or like parts. Detailed description of well-known functions and structures incorporated herein may be omitted for the sake of clarity and conciseness.

The present invention relates to an electronic device and method for supporting document composition thereof. Embodiments of the present invention disclose a data processing method and apparatus for processing data input in composing a document with an application capable of displaying an editable page and receiving various data, such as text, image, pictures, and video.

Embodiments of the present invention disclose a method and apparatus that is capable of inserting internal and/or external data into the page of the document currently being edited by the application operating on the electronic device in a simple and intuitive manner. According to embodiments of the present invention, it is possible to provide a frame area (e.g. window) for presenting data on the current page in response to a user's gesture input, and inserting data selected from the frame area into the page. According to embodiments of the present invention, it is possible to acquire various data from inside and outside of the electronic device, according to the data acquisition mode, and display the data as a preview when generating the frame area.

In the embodiments of the present invention, the application may be any of the various applications capable of composing a document (based on text and image) such as word processor, memo, email, message, and travel organizer. In embodiments of the present invention, the application may be any the various types of applications capable of providing an editable page and inputting various data through the page.

In embodiments of the present invention, the data may include image, picture, emoticon, map data, and Rich Site Summary or Really Simple Syndication (RSS) feed and various types of data formats capable of being inserted into the page, including internal data and external data. The internal data may be stored in the electronic device or acquired through picture-taking of the electronic device, and the external data may be acquired from outside of the electronic device. The data may also include still and motion pictures acquired from inside and outside of the electronic device.

In embodiments of the present invention, the outside of the electronic device may indicate a server, a cloud, or other electronic device connectable through a wired or wireless network. The external data may include all types of data acquirable from outside of the electronic device. The inside of the electronic device may include various components implemented in the electronic device, such as a storage unit and image sensor. The internal data may include all types of data acquired from inside of the electronic device.

In embodiments of the present invention, the data may be stored in the memory functionally connected inside or outside of the electronic device. The functionally connected memory may include the storage unit configured in the electronic device and external storage medium connected through an interface provided in the electronic device. As described above, the functionally connected memory may include the server, cloud, and other electronic devices connectable through wired or wireless network, or storage unit or database of the devices.

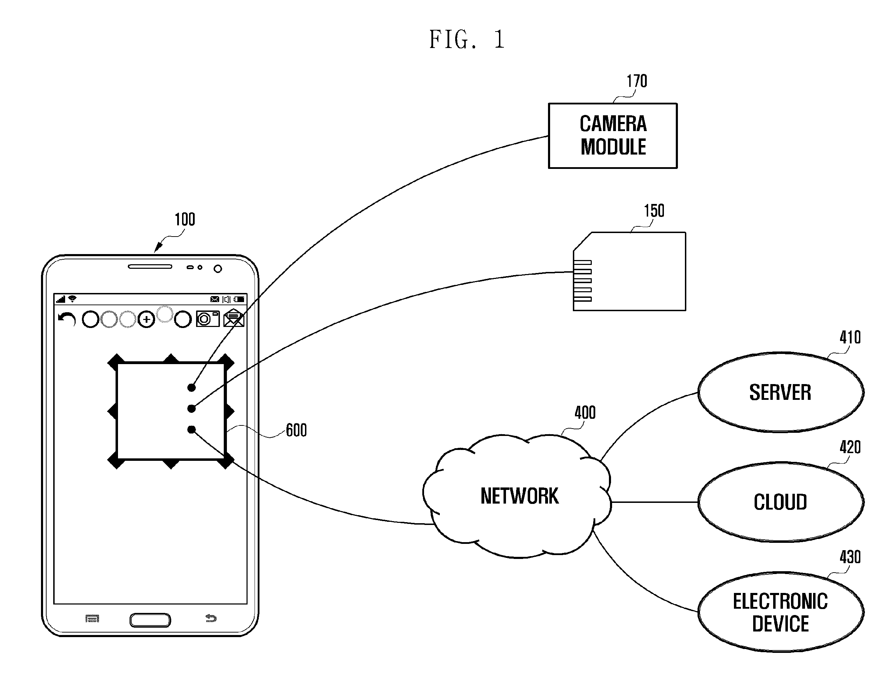

FIG. 1 illustrates a mechanism for an electronic device to acquire data to be inserted in a page, according to an embodiment of the present invention.

Referring to FIG. 1, the electronic device 100 executes an application such that a page of the application is displayed, the page including a frame area (e.g. window) generated in response to a user's gesture. The frame area 600 may be implemented on the page having a User Interface (UI) or Graphical UI (GUI) associated with the executed application in a shape and size corresponding to the user's drawing gesture to present the data acquired from inside or outside of the electronic device 100 as a preview. The frame area 600 may be implemented on a layer separate from, or overlaid on the layer on which the page is displayed.

According to embodiments of the present invention, the internal data may be acquired from the storage unit 150 attached to the electronic device 100. The internal data presented in the frame area 600 as a preview may be all data stored in the storage unit 150 or partial data extracted (retrieved) in correspondence to a keyword input by the user. The internal data may be acquired by the camera module 170 embodied in the electronic device 100. The internal data presented in the frame area 600 as a preview may be the data taken by use of the camera module 170.

The external data may be acquired from any of the server 410, the cloud 420, and another electronic device 430 to which the electronic device 100 is connected through the network 400. The external data may be downloaded form a specific server 410 such as an integration server, content serer, provider server, and internet server, to which the electronic device 100 is connected through the network 400. The external data also may be downloaded from the cloud 420 to which the electronic device 100 is connected through the network 400, the cloud 420 being associated with the user. The external data may be received from another electronic device 430 to which the electronic device 100 is connected through the network 400.

The external data presented through the frame area 600 as a preview may be the data retrieved from the server 410, the cloud 420, and another electronic device 430 based on the keyword input by the user. The external data presented through the frame area 600 as a preview may be the mode data that may be acquired from the server 410, the cloud 420, and another electronic device 430 without any keyword input by the user. In the following description, the server 410, the cloud 420, and another electronic device 430 are referred to as an external server, for conciseness. Although not shown in FIG. 1, the external server may be either of a desktop Personal Computer (PC) and a laptop PC.

In embodiments of the present invention, the network 400 may be any type of wired communication network, such as a Universal Serial Bus (USB) and data cable network, and a wireless communication network, such as a short-range communication network, cellular communication network, and Wireless Local Area Network (WLAN).

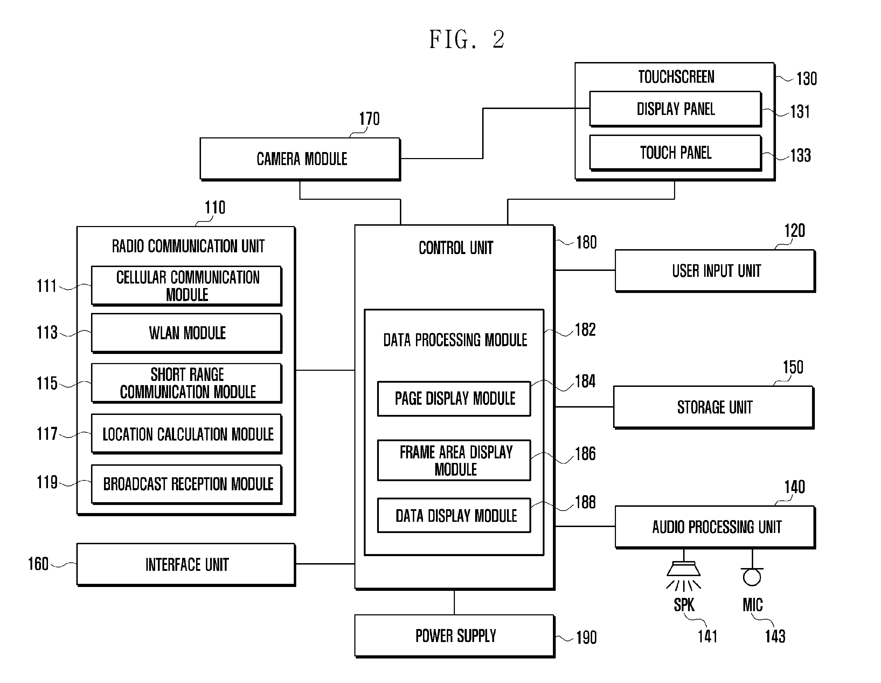

FIG. 2 illustrates a configuration of the electronic device, according to an embodiment of the present invention.

As shown in FIG. 2, the electronic device 100includes a radio communication unit 110, an input unit 120, a touchscreen 130, an audio processing unit 140, a storage unit 150, an interface unit 160, a camera module 170, a control unit 180, and a power supply 190. The electronic device may be implemented with components additional to or fewer than those depicted in FIG. 2. For example, if the electronic device does not support broadcast signal reception and playback, certain components such as the broadcast reception module 119 of the radio communication unit 110, may be omitted.

The radio communication unit 110 may include at least one module responsible for radio communication of the electronic device 10 with a wireless communication system or another electronic device 430. For example, the radio communication unit 110 may include a cellular communication module 111, a WLAN module 113, a short-range communication module 115, a location calculation module 117, and a broadcast reception module 119.

The cellular communication module 111 may communicate radio signals with at least one of a base station, another terminal, and various servers (e.g. integral server, provider server, content server, Internet server, and cloud server, etc.) on a cellular communication network. The radio signals may carry voice telephony, video conference, and text/multimedia message data. In embodiments of the present invention, the radio signals may carry the external data such as image, picture, emoticon, map data, and RSS feed transmitted by various servers. The cellular communication module 111 may receive the external data corresponding to a keyword input by the user through a cellular communication channel established with any of the various servers.

The WLAN module 113 is for wireless Internet access and establishing a WLAN link with another electronic device 430, and may be embodied in the electronic device or implemented as an external component. The wireless Internet technology may be any of Wireless Fidelity (Wi-Fi), Wireless Broadband (WiBro), World Interoperability for Microwave Access (Wimax), and High Speed Downlink Packet Access (HSDPA). The WLAN module 113 may establish a WLAN link with another electronic device 430 to transmit data selected by the user and receive external data. The WLAN module 113 may establish a WLAN link with any of various servers to download external data corresponding to the keyword input by the user.

The short-range communication module 115 is for short-range communication. There are many short-range communication technologies including Bluetooth®, Bluetooth Low Energy (BLE), Radio Frequency Identification (RFID), Infrared Data Association (IrDA), Ultra Wideband (UWB), ZigBee®, and Near Field Communication (NFC). The short-range communication module 115 may establish a short-range communication link with another electronic device 430 to transmit data selected by the user and receive external data. The short-range communication module 115 may maintain a turn-on or turn on/off according to the user configuration or in response to the user input.

The location calculation module 115 is for acquiring the location of the electronic device 100, and is represented by a Global Positioning System (GPS) module. The location calculation module 115 calculates distances from three or more base stations and time information, and performs triangulation with the calculated information to acquire the current location defined with latitude, longitude, and altitude. The location calculation module 115 receives the location information on the electronic device 100 from three or more satellites in real time to calculate current location of the electronic device 100, using various methods.

The broadcast reception module 119 may receive the broadcast signal, such as TV, radio, and data broadcast signal, and/or broadcast-related information such as on the broadcast channel, broadcast program, and broadcast service provider, through a broadcast channel.

The input unit 120 may generate input data corresponding to the user input for controlling the electronic device 100. The input unit 120 may include at least one of a keypad, a dome switch, a touchpad (resistive/capacitive), a jog wheel, a jog switch, a sensor such as speech, proximity, luminance, acceleration, and gyro sensors. The input unit 120 may be implemented as external buttons on the outside of the electronic device 100 or virtual keys being presented on the touch panel. The input unit 120 may receive a user input for inserting internal or external data presented in the frame area 600 into the page currently being edited and generates an input signal corresponding to the user input.

The touchscreen 130 is an input/output means responsible for receiving user input and displaying information, and includes a display panel 131 and a touch panel 133. Particularly, if a touch gesture is made by the user on the touch panel 133 when displaying a screen associated with an operation of the electronic device 100, the touchscreen 130 generates an input signal corresponding to the touch gesture to the control unit 180. The control unit 180 identifies the touch gesture and controls the electronic device 100 to perform the operation corresponding to the touch gesture.

The display panel may display (output) information processed by the electronic device 100. When the electronic device operates in the telephony mode, the display panel 131 is capable of displaying a UI or GUI related to the telephony mode. Particularly, the display panel 131 may display an execution screen of the application (e.g. page of the document being composed by the user) along with the frame area 600 generated by the user. The display panel 131 may present the data acquired from the inside or the outside of the electronic device 100 (internal or external data) in the frame area 600 of the presented page. If specific data is selected by the user from the data presented in the frame area 600, the display panel 131 may display the page in which the selected data is inserted.

The display panel 131 may display a scrolling screen on which the data presented in the frame area 600 is changing (switching), in response to the user's scroll control event. The display panel 131 may present the data (e.g. preview image) input through the camera module 170 in the frame area 600 on the current page. The display panel 131 may display the screen in a landscape mode or a portrait mode and switch the screen between the landscape and portrait modes according to the rotation direction (or orientation) of the electronic device 100.

The display panel 131 may be implemented as any of a Liquid Crystal Display (LCD), Thin Film Transistor LCD (TFT LCD), Light Emitting Diode (LED), Organic LED (OLED), Active Matrix OLED (AMOLED), flexible display, bended display, and 3-Dimensional (3D) display. The display panel 131 may be implemented as a transparent display panel through which the light penetrates.

The touch panel 133 is capable of being placed on the display panel 131 to detect the user's touch gesture made on the surface of the touch screen 130 (e.g. single touch gesture, multi-touch gesture, camera shooting gesture, and data input gesture). If the user's touch gesture is detected on the surface of the touchscreen 130, the touch panel 133 extracts the coordinates at the position of the touch gesture and transfers the coordinates to the control unit 180. The touch panel 133 detects the touch gesture made by the user and generates a signal corresponding to the touch gesture to the control unit 180, which executes a function according to the signal transmitted by the touch panel 133 in association with the position where the touch gesture is detected.

The tough panel 133 may be configured to convert the pressure applied at a specific position of the display panel 131 or the change of capacitance at a specific position of the display panel 131 to an electrical input signal. The touch panel 133 is capable of measuring the pressure of the touch input as well as the position and size of the touch. If a touch input is detected, the touch panel 133 generates corresponding signal(s) to a touch controller (not shown), which is capable of processing the signal(s) and transferring the corresponding data to the control unit 180. In this manner, the control unit 180 is capable of checking the touched area on the touchscreen 130.

The audio processing unit 140 relays the audio signal input from the control unit 180 to the speaker (SPK) 141 and the audio signal including voice input through the microphone (MIC) 143 to the control unit 180. The audio processing unit 140 processes the voice/sound data to output through the speaker 141 as an audible sound wave under the control of the control unit 180, and converts the audio signal including voice input through the microphone 143 into a digital signal to be output to the control unit 180.

The speaker 141 is capable outputting the audio data received by means of the radio communication unit 110 in the telephony, document editing e, messaging, messenger, audio (video) recording, speech recognition, broadcast reception, media content (audio file and video file) playback modes, and photo shooting modes, and stored in the storage unit 150. The speaker 141 is also capable of outputting an audio signal related to the function executed in the electronic device 100, such as inbound call reception, outbound call placing, data input, picture-taking, and media content playback.

The microphone 143 is capable of processing the sound input in the aforementioned various modes, to generate electronic audio data. The processed audio data may be processed in the format capable of being transmitted to the mobile communication base station by means of the mobile communication module 111. The microphone 143 may be implemented with various noise cancellation algorithms for removing noise generated while receiving the outside sound.

The storage unit 150 temporarily stores programs associated with information processing and control function of the control unit 180 and input/output data (e.g. internal and external data, contact information, document, picture, messaging and chat data, and media contents including audio and video). The storage unit 150 is also capable of storing information of usage frequencies (e.g. application usage frequency, data usage frequency, keyword usage frequency, and multimedia content usage frequency), weights, and priorities, and data of various patterns of vibration and sound effects output in response to touch inputs made on the touchscreen 130.

The storage unit 150 stores the Operating System (OS) of the electronic device 100 and programs for controlling touchscreen-based input and displaying input data and inserting data into the page of the document currently being composed in real time and data generated by the applications semi-persistently or temporarily. The storage unit 150 also may store various configuration information associated with the creation of the frame area 600 in correspondence to the drawing gesture of the user in shape and size.

The configuration information may explain how to maintain the shape in correspondence to the user input, and automatically convert the shape to a fixed diagram and information on the user input method for forming the frame area 600. The configuration information may include the information on the memory from which the data is acquired, and may be configured according to the source of the data (e.g. the source functionally connected to the electronic device 100 to provide the data). For example, the configuration information may include the information on the internal data acquisition from the storage unit 150 or camera module 170 and the external data acquisition from an external server. The configuration information may be defined by the user or set to default at the manufacturing state of the electronic device 100.

The storage unit 150 may be implemented with a storage medium of at least one type including a flash memory, hard disk, micro, and card (e.g. Secure Digital (SD) type and eXtream Digital (XD) card) memories, and Random Access Memory (RAM), Dynamic RAM (DRAM), Static RAM (SRAM), Read-Only Memory (ROM), Programmable ROM (PROM), Electrically Erasable PROM (EEPROM), Magnetic RAM (MRAM), magnetic disk, and optical disk type memories. The electronic device 100 may interoperate with a web storage operating as the storage unit 150 on the Internet.

The interface unit 160 provides the interface for the external devices connectable to the electronic device 100. The interface unit 160 may transfer the data or power from the external devices to the internal components of the electronic device 100 and transfer the internal data to the external devices. For example, although not shown, the interface unit 160 may be provided with a wired/wireless headset port, external charging port, wired/wireless data port, memory card slot, identity module slot, audio input/output port, video input/output port, and earphone jack.

The camera module 170 is responsible for photo shooting function of the electronic device 100. The camera module 170 may shoot a still or motion image of a scene. The camera module 170 may shoot a picture of a scene and output the video data of the picture to the display panel 131 and the control unit 180 under the control of the control unit 180. The camera module 170 may include an image sensor (or camera sensor) (not shown) for converting optical signal to electric signal and an video signal processor (not shown) for converting the electronic signal received from the image sensor to digital video data. The image sensor may be a Charge-Coupled Device (CCD) or a Complementary Metal-Oxide-Semiconductor (CMOS) sensor. The camera module 170 may provide an image processing function for supporting photo shooting according to various shooting options set by the user (e.g. zooming, screen aspect ratio, visual effect (e.g. sketch, mono, sepia, vintage, mosaic effect, etc.), frame, etc.).

The control unit 180 controls the electronic device 100. For example, the control unit 180 may control voice telephony, data communication, and video conference. The control unit 180 may include an Application Processor (AP) (not shown) for processing the document composition function and related aspects of the application. In an embodiment of the present invention, the application processor may be embedded in the control unit 180 or independently implemented. The control unit 180 may include a data processing module having a page display module 184, a frame area display module 186, and a data display module 188. The additional information on the page display module 184, frame area display module 186, and data display module 188 is provided in association with FIGs. 2 to 35 herein.

The page display module 184 may display an editable page. The frame area display module 186 may create the frame area 600 on the corresponding page in page view mode of a specific application (e.g. document editor, email editor, and web browser), and may determine a data acquisition mode in creating the frame area 600. The data display module 188 acquires the internal or external data according to the determined data acquisition mode and controls such that the acquired data is presented in the frame area 600. The data display module 188 may control such that the data (e.g. preview image) input through the camera module 170 is displayed in the frame area 600 when creating the frame area 600.

The data display module 188 may detect an input event for inputting data when displaying the acquired data in the frame area 600. When the insertion event is detected, the control unit 180 may control to processes the data presented in the frame area 600 to generate the insertion data to be inserted into the page in response to the insertion event, and display the data as inserted on into the corresponding page.

The page display module 184 may control based on the object input mode and data insertion mode of the application. In embodiments of the present invention, the object input mode may indicate the mode for inputting an object (e.g. text, diagram, and picture input by the user). The data insertion mode may be capable of generating the frame area 600, presenting the internal or external data through the frame area 600, editing the frame area 600 (size adjustment, location movement, and rotation), and configuring option (e.g. zoom-in/out, visual effect, cutting, decorating, framing, and rotating) on the data being presented in the frame area 600. For example, the data insertion mode may be capable of generating the frame area 600, presenting acquired data in the frame area 600, and inserting the selected data.

The page display module 184 may control switching between the object input mode and the data insertion mode and waiting for user's gesture input when maintaining the page screen of the application when the mode is switched from the object input mode to the data insertion mode. The control unit 180 may control this switching in response to the selection of the insertion item for activating (executing or switching) the data insertion mode when the electronic device 100 is operating in the object input mode.

The frame area display module 186 may generate the frame area 600 at the location of the user gesture input in the data insertion mode with a shape and size corresponding to the user gesture, and display the are 600 on the page. For example, the control unit 180 may distinguish between the user input for inputting the object on the page in the object input mode and data insertion mode, and the user input for forming the frame area 600. The user input made in the data input mode is processed as the input for forming the frame area 600. If the user input does not fulfill the condition for forming the frame area 600, the user input may be ignored to prevent the user input from unintentionally inserting an object.

The data display module 188 may operate the camera module 170 on the background when the mode switches from the object input mode to the data insertion mode. Alternatively, the area creation event is input and controls such that, when the frame area 600 is created, the data (preview image) acquired through the camera module is presented in the area 600.

According to an embodiment of the present invention, the control unit 180 may control various functions of the electronic device 100 as well as the above-described functions. The control unit 180 is capable of receiving input signals corresponding to various touch-based events supported on the touch-based input interface (e.g. touchscreen 130) and controlling functions in response to the input signal. The control unit 180 is also capable of controlling transmission/reception of various data through wired or wireless communication channels.

The power supply 190 supplies the power from an external or internal power source to the internal components of the electronic device.

As described above, the electronic device, according to embodiments of the present invention, may be any of the well known types of information communication and multimedia devices equipped with at least one of an Application Processor (AP), Graphic Processing Unit (GPU), and Central Processing Unit (CPU). For example, the electronic device may be any of cellular communication terminal operating with various communication protocols corresponding to the communication systems, tablet Personal Computer (PC), smartphone, digital camera, Portable Multimedia Player (PMP), Media Player (e.g. MP3 player), portable game console, Personal Digital Assistant (PDA), etc. Also, the gesture-based control method according to one of various embodiments of the present disclosure may be applied to various display devices such as digital television (TV), Digital Signage (DS), and Large Format Display (LFD), laptop computer, and desktop computer.

The gesture-based data processing method, according to embodiments of the present invention may be implemented in software, hardware, or combination of both and stored in a computer-readable storage medium. In hardware implementation, the gesture-based data processing method, according to one of the embodiments of the present invention may be implemented with at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and other electrical units which perform certain tasks.

Some embodiments of the present invention may be implemented by the control unit 180. When implemented in software, the procedures and functions described in the embodiments of the present invention may be implemented with the software modules (e.g. page manager 184, guide manager 186, and object manager 188), which may perform at least one of the above-described functions.

The storage medium may be any of the computer-readable storage media storing the program commands of display a page for receiving a user input, forming the frame area 600 on the page in response to a user input, and presenting data in the frame area 600.

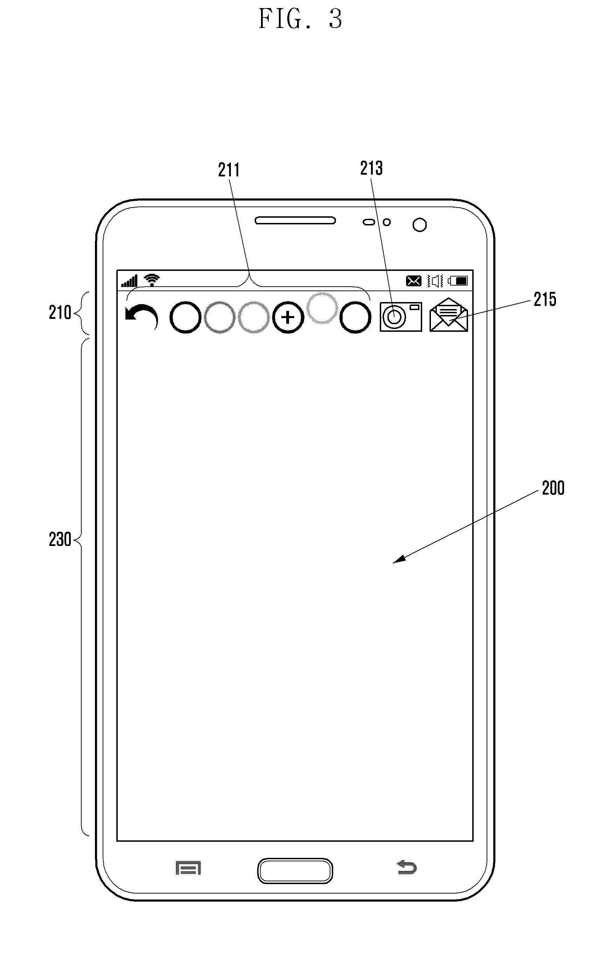

FIGs. 3 to 9 illustrate screen displays for explaining inserting data into the onscreen page of the electronic device, according to an embodiment of the present invention.

FIG. 3 illustrates a screen display of the electronic device 100 when the application for performing the present invention is executed by the user. In FIG. 3, it is assumed that the application is a memo application. However, the present invention are not limited to the memo application but embodied with various applications capable of displaying an editable page and receiving various data on the page.

In FIG. 3, the user may execute the memo application and compose a document with the memo application. For example, the electronic device 100 may control to display the page 200 as a memo application-specific UI or GUI upon execution of the memo application.

As shown in FIG. 3, the page of the memo application may be divided into an item area 210 for providing various optional items and a document composition area 230. The item area 210 may be arranged at a portion of the page, and the document composition area 230 may be overlaid thereon.

The optional items may include items for selecting various tools (options) for use in composing a document. For example, the optional items may include edit items 211 for selecting object color, boldness, erase, and rollback functions, insertion item 213 for inserting data, and sharing items for sharing (transmitting) the composed document with external devices.

The user may command to form the frame area 600 by means of the insertion item 213, present data acquired from inside or outside of the electronic device 100, and switch the mode to the data input mode for inserting the data presented through the frame area 600 into the page 200. If the data input mode is activated in response to the user input made on the insertion item 213, the electronic device 100 regards the user input made in the document composition area 230 as the input for forming the frame area 600 other than the input of the object for document composition.

Although the embodiment of FIG. 3 is directed to when one insertion item 213 is provided, the present invention may be embodied with plural insertion items depending on the supportable data formats (e.g. still image, motion image, and audio file) and data acquisition modes (e.g. internal data insertion, camera-shot data insertion, and external server-provided data insertion). Although the embodiment of FIG. 3 is directed to when the optional items are provided as an icon, the present invention may be embodied to provide the optional items as any of an icon, text, and any combination thereof.

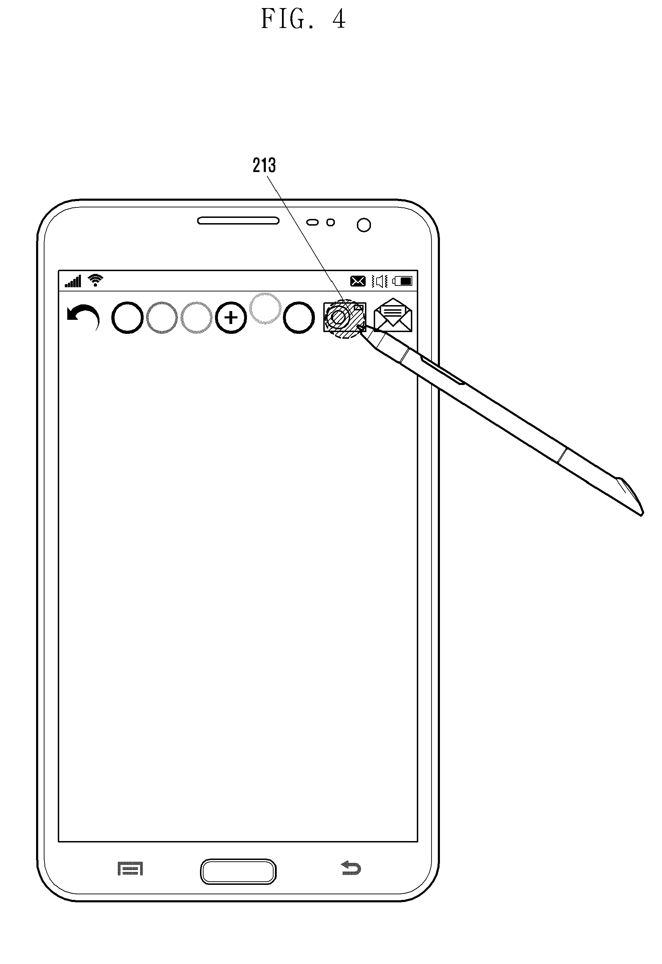

In FIG. 3, the user may select the insertion item 213 (e.g. tap touch gesture) among the optional items provided in the item area 210 as shown in FIG. 4 in order to switch the mode to the data insertion mode for inserting certain data (e.g. internal or external data). For example, the user may select the insertion item 213 to insert certain data (e.g. still image and motion image) into the page 200 of the document currently being composed. Then the electronic device 100 regards the selection of the insertion item 213 as the initiation of data insertion (e.g. initiation of forming the frame area 600) other than object insertion, and thus switches from the object input mode to the data insertion mode and waits for a user input.

The user may select the insertion item 213 to initiate the data insertion mode and determine the position and size of the data to be inserted on the page 200. The user may make a gesture (area generation gesture such as drawing gesture) for forming the frame area 600 at the determined position.

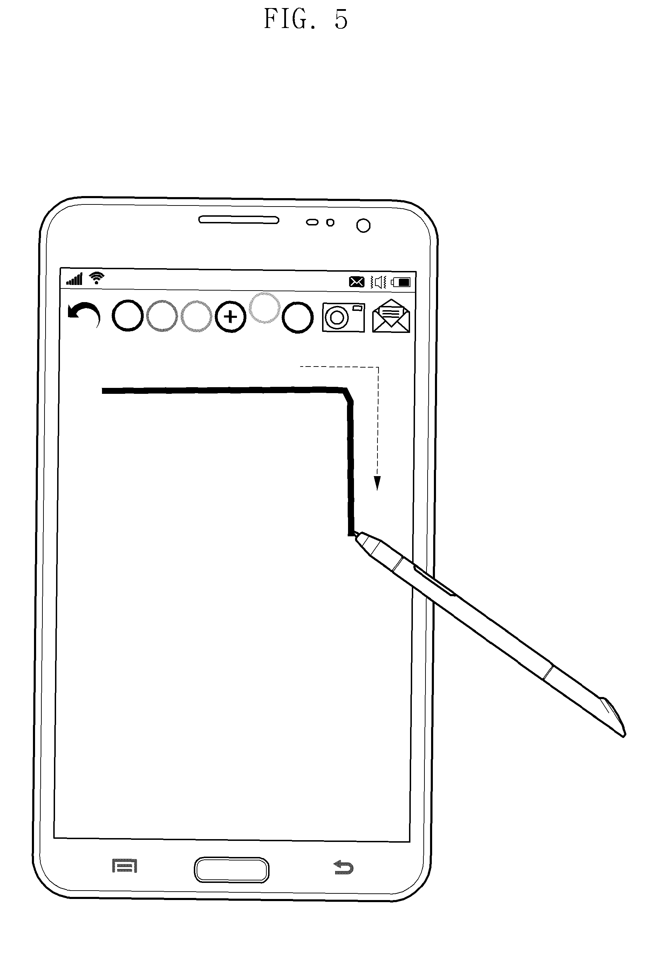

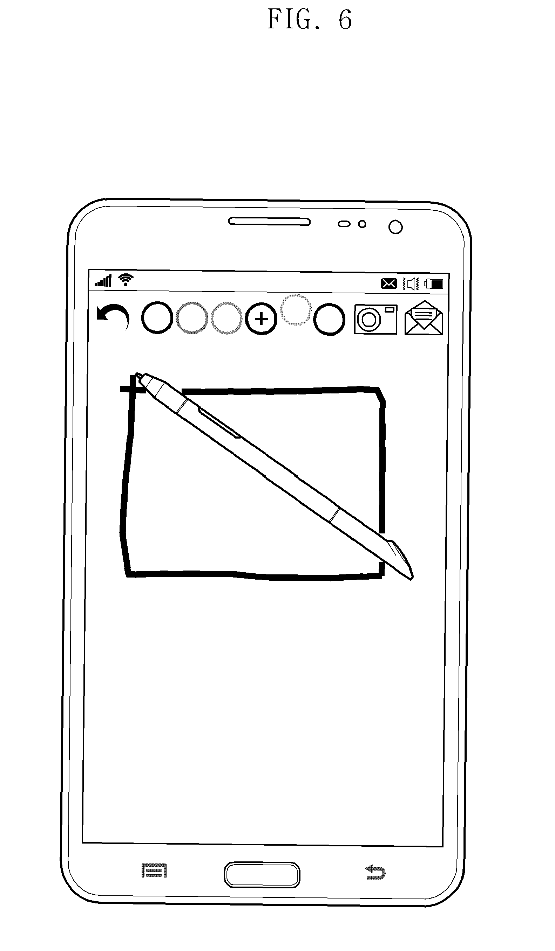

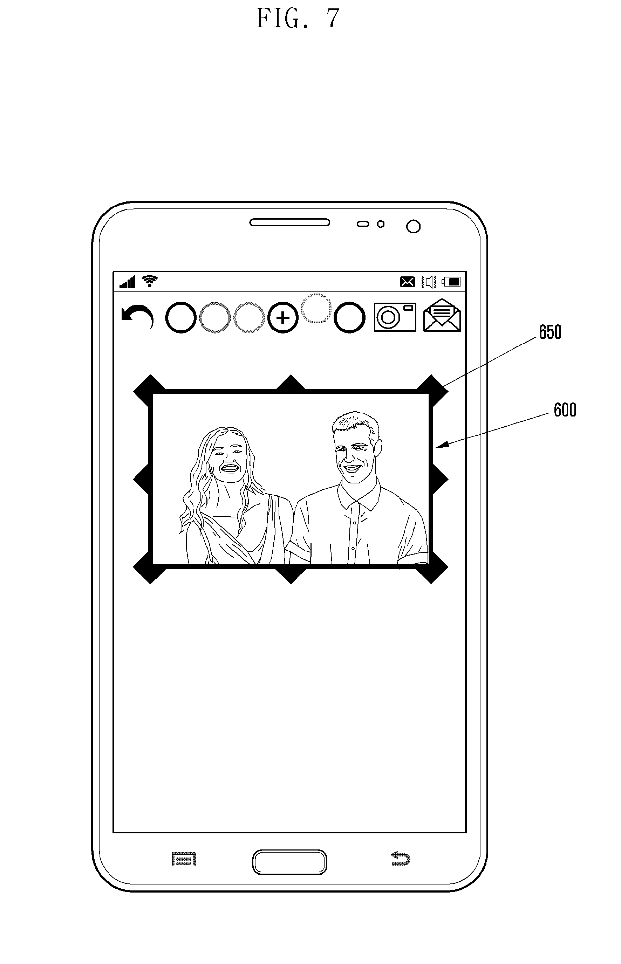

For example, the user may make a gesture drawing the frame area 600 in the shape of a square having the determined size at the determined position. FIGs. 5 and 6 show the screen displays when the user draws a line in the clockwise direction to form a closed curve (e.g. square and circle) as the frame area 600. If the user's drawing gesture has completed as shown in FIG. 6, the electronic device 100 renders the drawing such that the screen as shown in FIG. 7 is displayed.

FIG. 7 illustrates a screen of the electronic device 100 after the frame area 600 has been formed in response to the user's gesture (area creation event) in the data insertion mode. According to an embodiment of the present invention, if the area creation gesture is made by drawing a rectangle, the electronic device 100 renders the rectangle as the frame area 600 in response to the user's drawing gesture as shown in FIG. 7.

The electronic device 100 acquires the data (e.g. internal and external data) according to a predetermined method when forming the frame area 600 and displays the acquired data through the frame area 600 as a preview., as shown in FIG. 7 If the data to be acquired is the internal data and is acquired by capturing an instant of the internal data, the electronic device may operate the camera module 170 on the background while forming the frame area 600. The electronic device may display the data (image) of a scene input through the camera module 170 in the frame area 600 as a preview.

The embodiment of FIG. 7 is directed to when the acquired data corresponds to a still image from inside or outside of the electronic device 100 and is displayed in the frame area 600 in a preview mode. For example, the electronic device 100 may retrieve photo data from the storage unit 150 and display the retrieved photo data in the frame area 600. The electronic device 100 also may download photo data from an external server and display the downloaded photo data in the frame area 600.

The frame area 600 may be created in correspondence to the position and size of the user gesture (drawing) made on the page 200 along with adjustment marks 650 on the boundary line that are capable of allowing the user to intuitively adjust the frame area 600 (e.g. size, position, rotation). The user may adjust, i.e. extend or shrink, the size of the frame area 600 in one direction (e.g. up, down, left, and right directions) or multiple directions (e.g. top left, top light, bottom left, and bottom right directions) using the adjustment marks 650. The user may move the frame area 600 within the boundary of the page 200 by making a movement (drag) gesture in a direction when holding the boundary or the adjustment item 650 on the boundary of the frame area 600.

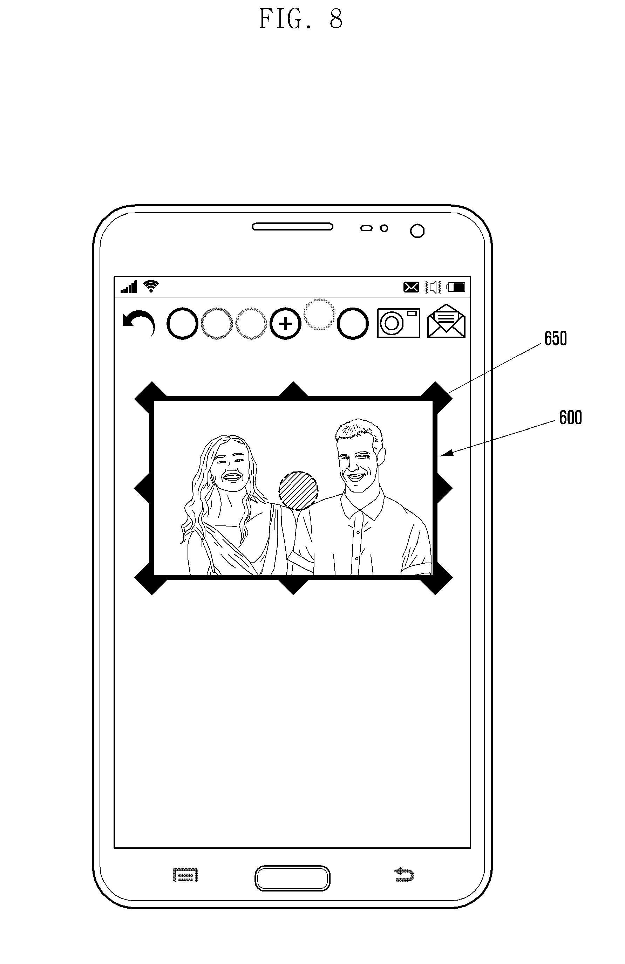

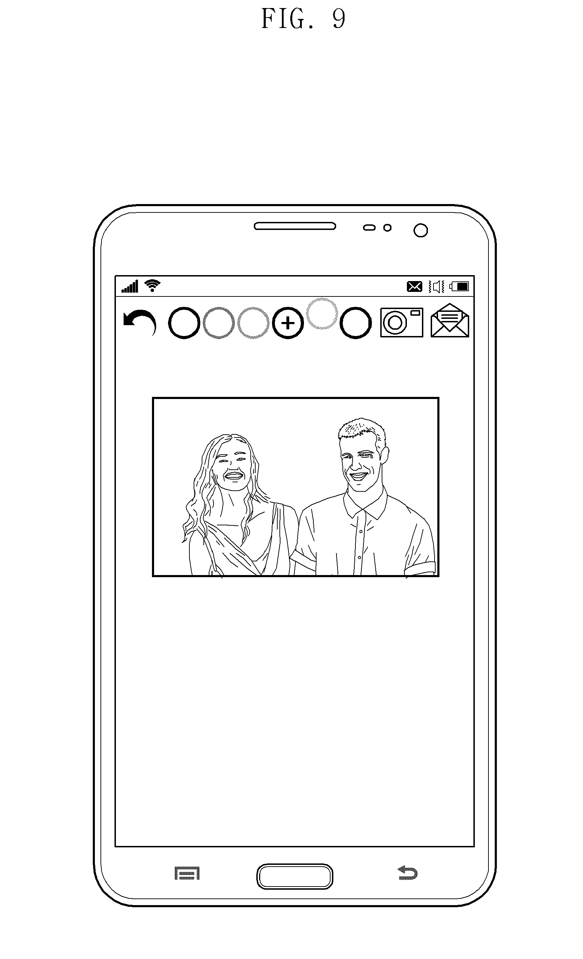

FIG. 8 illustrates a screen of the electronic device 100 when the user inputs a command of inserting (selecting) the data presented in the frame area 600 when the data is presented through the frame area 600 in the preview mode as shown in FIG. 7. The insertion command may be input as a touch gesture (e.g. tap) or key selection on the input unit 120. The screen of the electronic device 100 as shown in FIG. 8 may be changed to the screen of FIG. 9 in response to the user command input, corresponding to the user's gesture.

After the activation of the frame area 600 as shown in FIG. 8, only the user's input gesture made for manipulating the data within the frame area 600 is processed as the valid input. The user's input gesture made outside of the frame area 600 (e.g. for inserting object) may be ignored. However, the user's input gesture made outside of the frame area 600 which is of manipulating the frame area 600 or related to calling a menu may be processed as the valid input.

FIG. 9 illustrates a screen of the electronic device 100 when the data presented in the frame area 600 is inserted into the page of the document currently being composed according to the user input. In an embodiment of the present invention, the electronic device 100 processes the data displayed in the frame area 600 to generate insertion data, which is inserted into the onscreen page 200 of the document currently being composed as shown in FIG. 9.

As shown in FIG. 9, the bold boundary line and adjustment marks on the boundary line are removed, and the data equal in size to the frame area 600 is inserted to the same position as the frame area 600 in the onscreen page 200. Once the insertion data is inserted, the electronic device 100 ends the insertion mode, switches the mode to the object input mode, and waits for a user input (e.g. object input). However, the present invention is not limited thereto, and may be embodied to maintain the data insertion mode after the insertion of the data according to the user configuration.

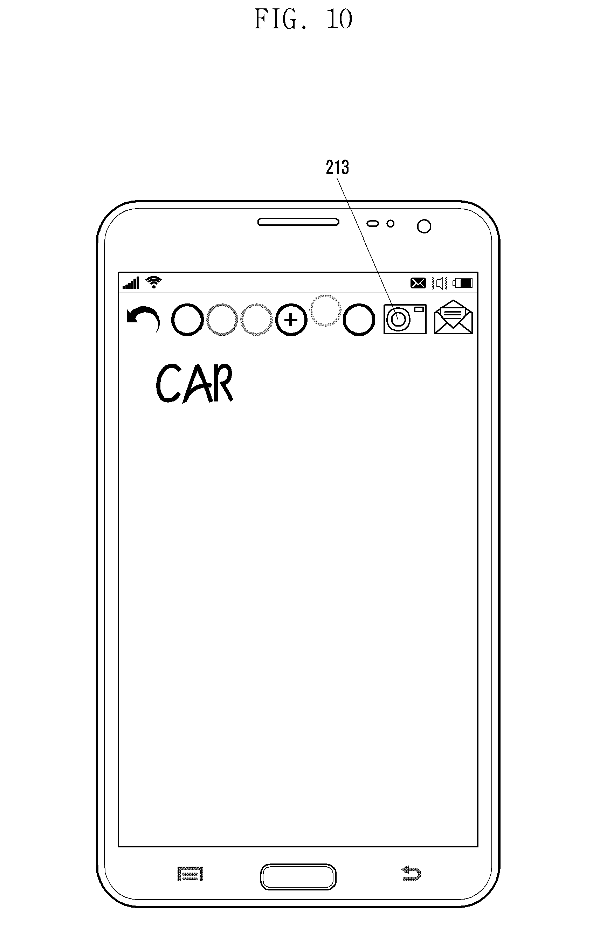

FIGs. 10 to 12 illustrate screen displays for explaining retrieving and displaying data using an object on the onscreen page of the electronic device, according to an embodiment of the present invention.

FIG. 10 illustrates a screen of the electronic device 100 when the user executes the application for performing an operation of the present invention. The electronic device 100 receives a user input in composing a document of the application and displays a related object. For example, the user may execute the application and input an object "CAR" as shown in FIG. 10. Then the electronic device 100 may display the page 200 on which the corresponding object (e.g. text object of "CAR") is presented in response to the user input as shown in FIG. 10.

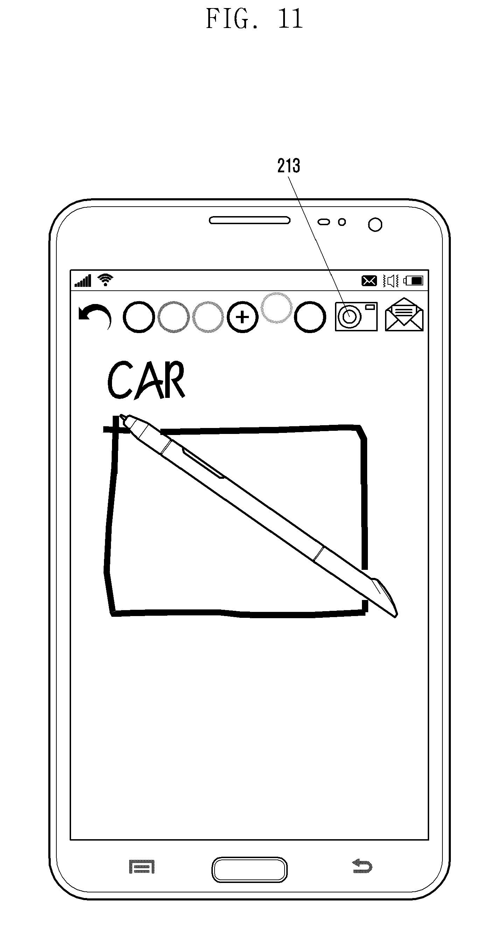

In FIG. 10, the user may switch the mode to the data insertion mode as described above and create the frame area 600 at a portion of the onscreen page 200 as shown in FIG. 11. For example, the user may make a gesture drawing the frame area 600 in the shape of a rectangle at a certain position with a certain size on the onscreen page 200 such that the rectangular frame area 600 appears on the screen as shown in FIG. 11.

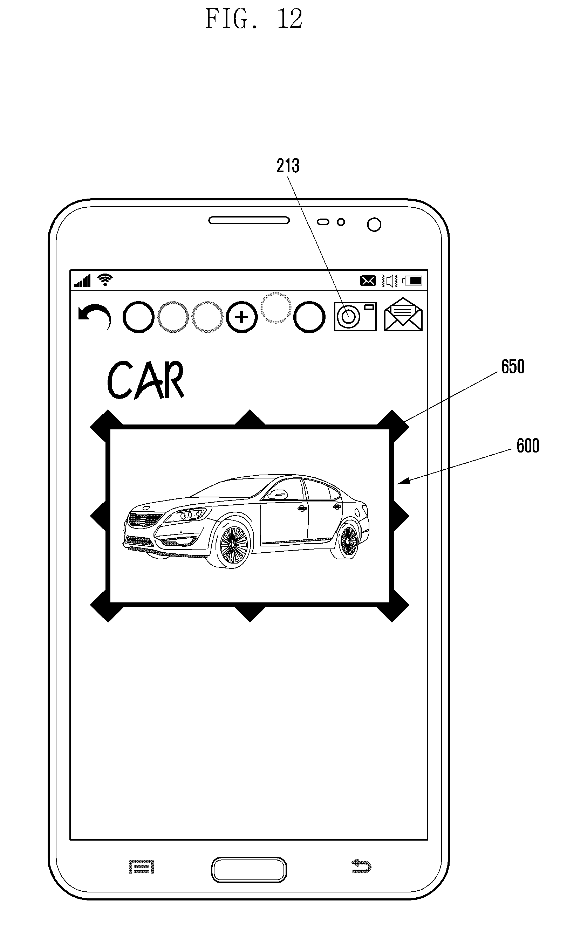

FIG. 12 illustrates a screen of the electronic device 100 when the frame area 600 is formed in response to the user's gesture in the data input mode, according to an embodiment of the present invention. When the user makes a gesture of drawing a rectangle to create the frame area 600, the electronic device 100 forms the frame area 600 in response to the user's drawing gesture as shown in FIG. 12.

At this time, the electronic device 100 retrieves the data (e.g. internal and external data) according to the method configured in creating the frame area 600 based on the input object (e.g. CAR) and displays the retrieved data in the frame area 600. When the frame area 600 is created in the data insertion mode when the object (e.g. CAR) has been input, the electronic device 100 retrieves the data to be displayed in the frame area 600 based on the input object.

The electronic device 100 performs text recognition on the input object to generate a keyword (e.g. CAR) and retrieves the internal and/or external data matching the keyword according to a data acquisition mode. For example, the electronic device 100 may perform text recognition on the input object to acquire the keyword "CAR" and retrieve the data matching the keyword "CAR" from the internal and/or external data. The retrieved data is buffered and then processed so as to be presented in the frame area 600.

As shown in the screen displays of FIGs. 10 to 12, the user may insert an intended keyword as an object on the page 200. The data corresponding to the keyword may be presented in such a way of inserting the keyword object and drawing the frame area 600.

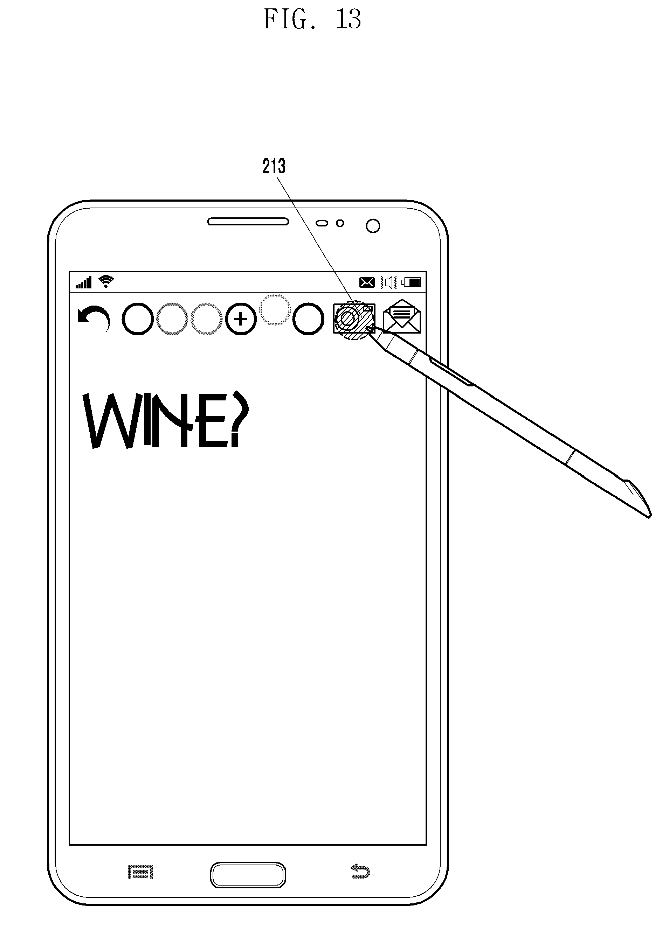

FIGs. 13 to 18 illustrate screen displays for explaining inserting data shots by the camera module 170 into the onscreen page of the electronic device, according to an embodiment of the present invention.

FIG. 13 illustrates a screen display of the electronic device 100 when the user executes an application for performing aspects of the present invention and inserting an object into a document currently being composed. As shown in FIG. 13, if the user inputs a certain object in the screen display of FIG. 3, the object is presented on the screen of the electronic device 100. For example, the electronic device may present the object (e.g. text object of "WINE?") in response to the user input as shown in FIG 13. The screen of the electronic device 100 as shown in FIG. 3 may be switched to the screen in which the text objects (e.g. W, I, N, E, and ?) inserted by user's writing are presented as shown in FIG. 13.

The electronic device 100 then may present the object "WINE?" at a portion of the onscreen page 200 where the user has made the insertion. The object may be a series of objects "W," "I," "N," "E," and "?" sequentially inserted.

In FIG. 13, the user may select an insertion item 213 among the optional items in the item region 210 to switch the mode to the data insertion mode capable of inserting the data shot by a camera in real time as shown in FIG. 13. For example, the user may select the insertion item 213 to insert the data shot by the camera (e.g. still image and motion image) into the onscreen page of the document currently being composed. Then the electronic device 100 determines the user's action of selecting the insertion item 123 as data insertion initiation command (e.g. area (window) 600 creation command) other than object input command, switches from the object input mode to the data insertion mode, and waits for a user input.

The user may select the insertion item 213 to execute the data input mode and determine the position and size of the data shot by the camera module 170 in the onscreen page 200. The user may make a gesture (e.g. drawing gesture) for creating the frame area 600.

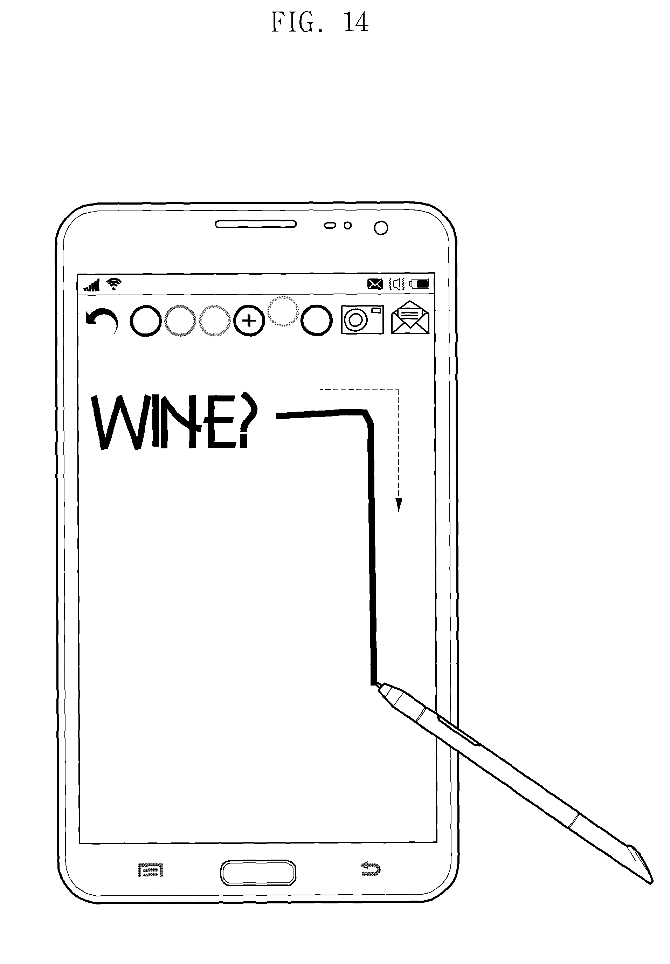

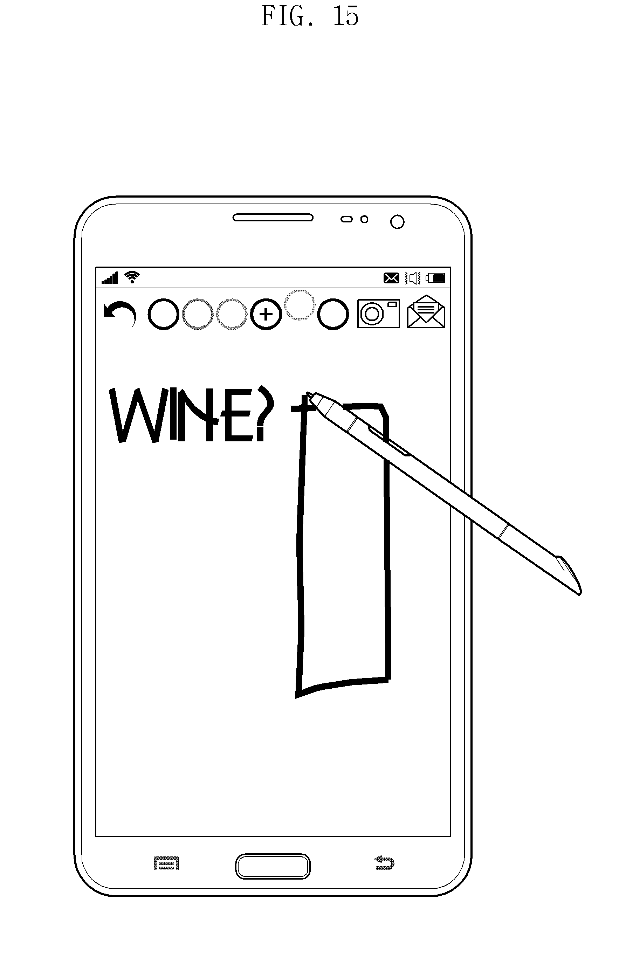

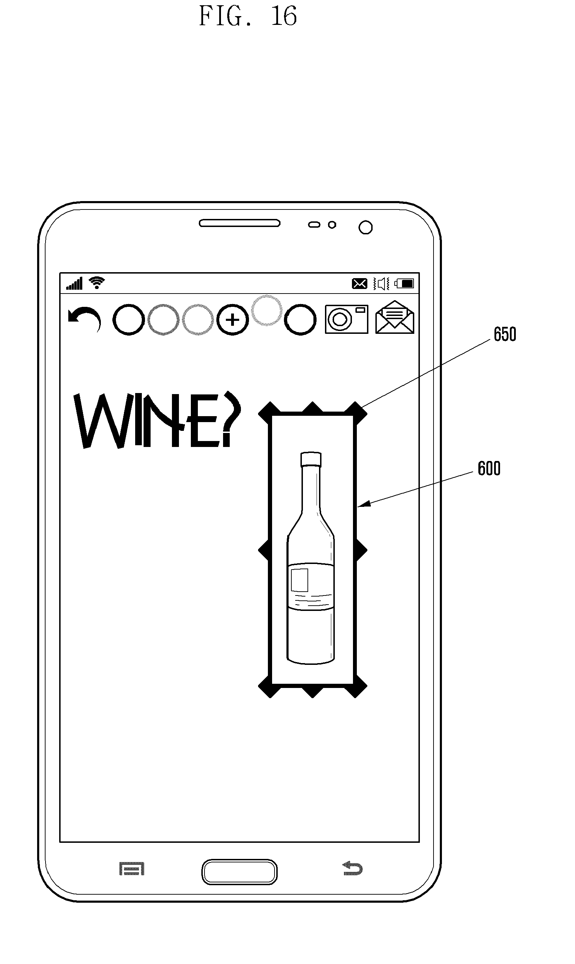

For example, the user may make a gesture drawing a rectangular frame area 600 having a size at a certain part of the onscreen page as shown in FIGs. 14 and 15. FIGs. 14 and 15 illustrate screen displays of the electronic device 100 when the user draws a closed curve (e.g. rectangle and circle) in the clockwise direction to form the frame area 600. If the user's drawing gesture has completed, the screen of the electronic device 100 may be switched from the state of FIG. 15 to the state of FIG. 16.

FIG. 16 illustrates a screen display of the electronic device 100 when the frame area 600 is created in response to the user's gesture (area creation event) in the data insertion mode. If the user's gesture of drawing the rectangle has completed, the electronic device 100 creates the rectangular frame area 600 in response to the user's drawing gesture as shown in FIG. 16.

As shown in FIG. 16, the electronic device 100 may control the camera module 170 to run on the background when creating the frame area 600. The electronic device 100 may display the data of the subject captured by the camera module 170 through the frame area 600 in the preview mode. FIG. 16 is directed to when the user shoots a bottle as the subject such that the picture of the bottle is presented in the frame area 600 as a preview. As described above, the frame area 600 may be created in the same size at the same position as the user's drawing gesture, and the adjustment marks 650 are arranged on the boundary line of the frame area 600.

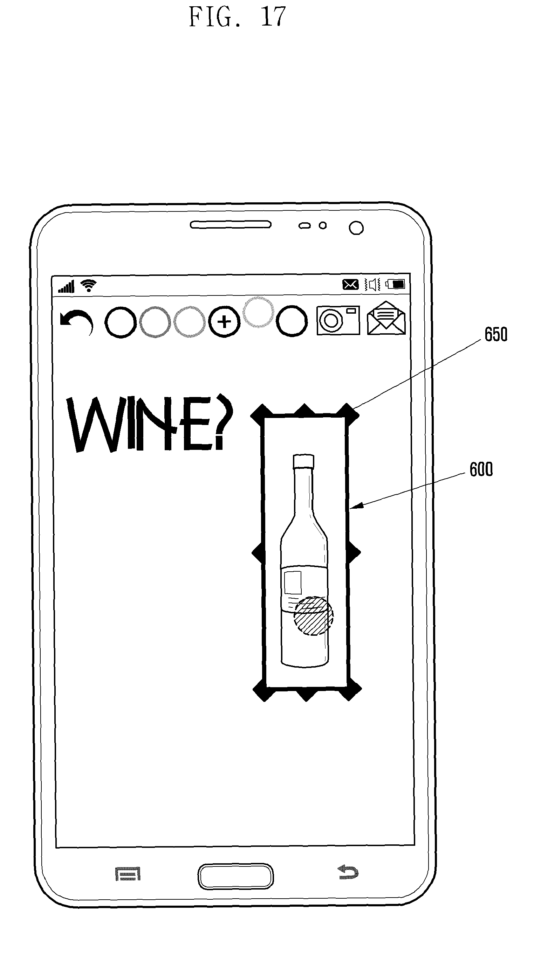

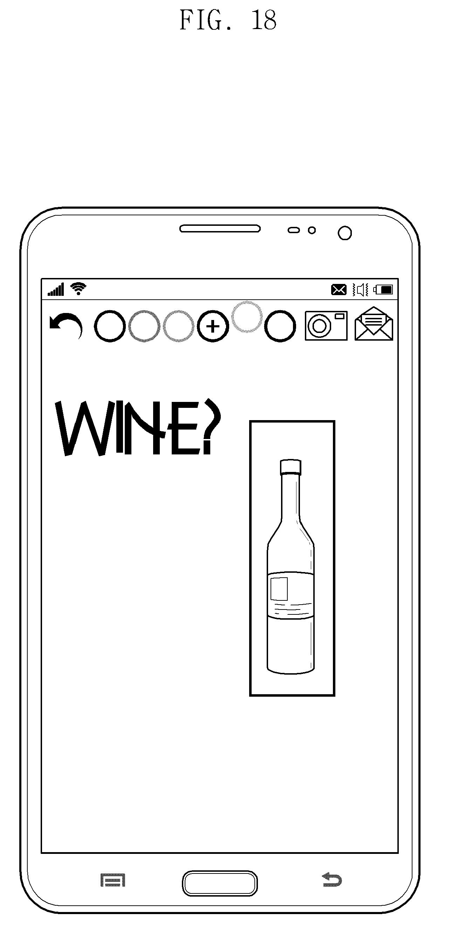

FIG. 17 illustrates a screen display of the electronic device 100 when the user inputs a command for shooting the data displayed in the frame area 600 and inserts the shot data into the page 200 in FIG. 16. The input command may be a touch gesture (e.g. tap) or by means of the input unit 120. In response to the user's insertion command, the screen state as shown in FIG. 17 is switched to the screen state as shown in FIG. 18.

FIG. 18 illustrates a screen display of the electronic device 100 when the application captures the data presented in the frame area 600 created by the user and inserts the captured data into the page 200 in response to the user input. According to an embodiment of the present invention, the electronic device 100 captures the data presented in the frame area 600 to generate the insertion data and inserts the insertion data into the onscreen page 200 of the document currently being composed as shown in FIG. 18.

As shown in FIG. 18, the bold boundary line and adjustment marks 650 indicating the active state are removed such that the data equal in size to the frame area 600 is inserted to the same position as the frame area 600 in the onscreen page 200. Once the insertion data is inserted, the electronic device 100 ends the insertion mode, switches the mode to the object input mode, and waits for a user input (e.g. object input). However, the present invention is not limited thereto, and may be embodied to maintain the data insertion mode after the insertion of the data according to the user configuration.

Once the insertion data is inserted into the onscreen page of the document currently being composed, the camera module 170 is no longer needed. Accordingly, after the insertion is generated and inserted to the ongoing page, the camera module 170 may turn off. However, the present invention is not limited thereto, and may be embodied to maintain the active state of the camera module 170 before the end of the application.

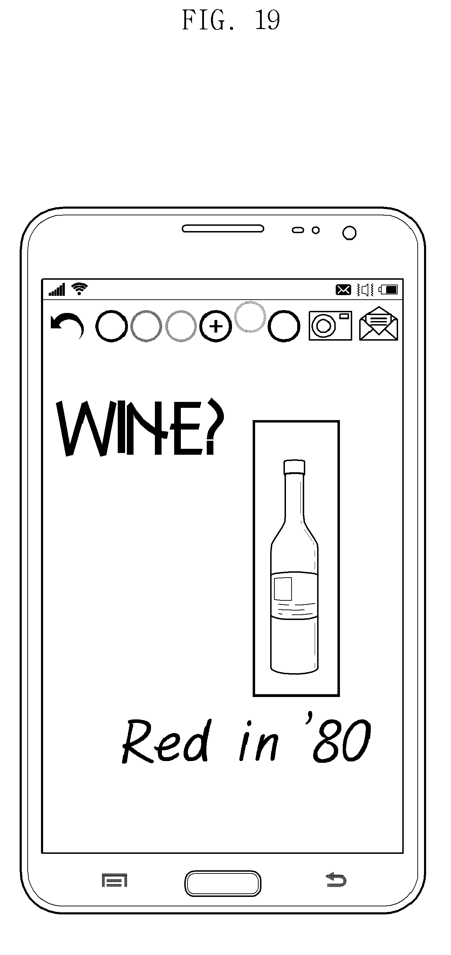

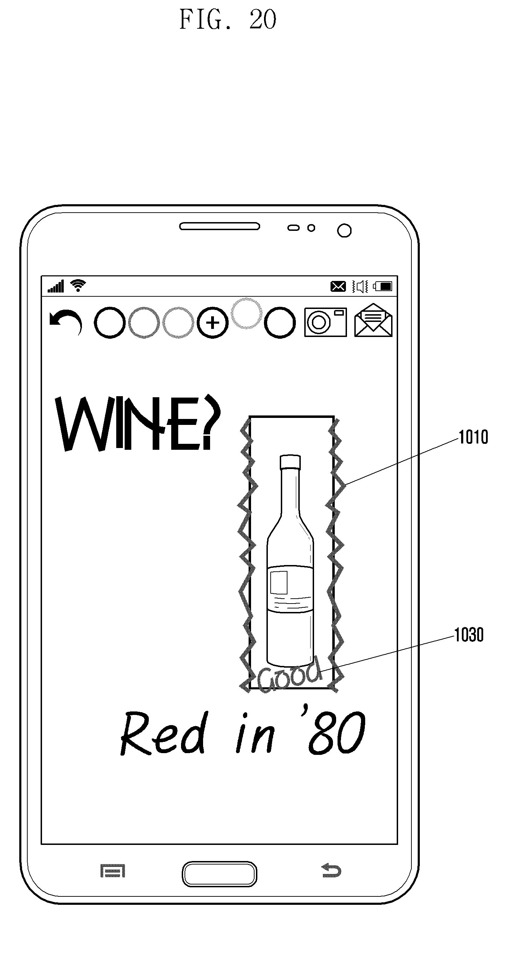

FIGs. 19 and 20 illustrate screen displays for explaining a document composition operation using an application in an electronic device, according an embodiment of the present invention.

FIG. 19 illustrates a screen display of the electronic device 100 when the user inputs a new object (e.g. "red in '80") in the screen state of FIG. 18. If the data is input into the onscreen page 200 of the document currently being composed as described above, the electronic device 100 may enter the object input mode to receive the user input for editing the document and display the object (e.g. text and diagram) in response to the user input. For example, the electronic device 100 may display the screen on which the object "red in '80" is inserted in response to the user input as shown in FIG. 19. For example, the screen of the electronic device 100 as shown in FIG. 18 may be changed to the screen having the object inserted by the user as shown in FIG. 19.

The user may input an object (e.g. text and diagram) for the data inserted in the page 200 in the screen state of FIG. 18 or 19.

FIG. 20 illustrates the screen display when the user inputs an additional object (diagram or text decorating the inserted data) to the inserted data in the page 200 in the screen state of FIG. 19. For example, the electronic device 100 may display the screen presenting the data along with the diagram 1010 in shape of a wave image, and text "Good" 1030. The screen of the electronic device 100 may be changed to the screen as shown in FIG. 20 according to the additional input of the object.

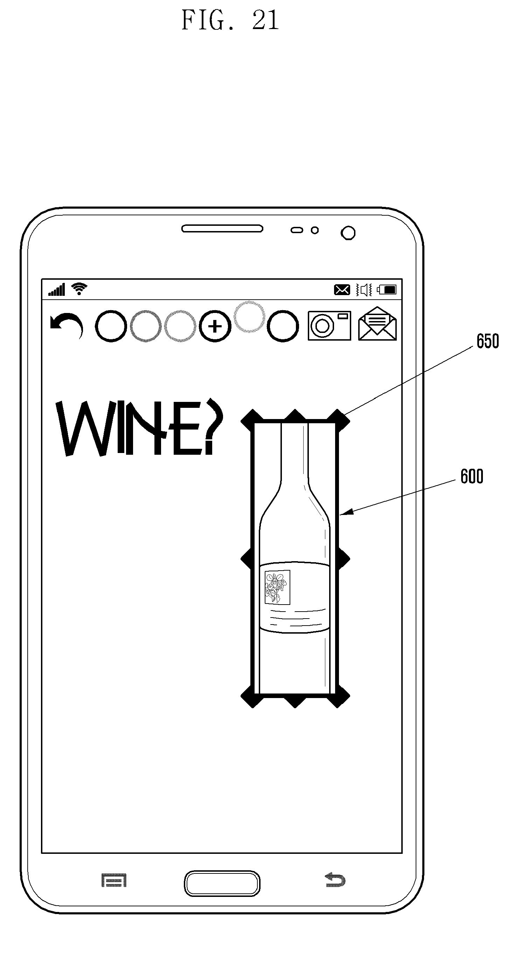

FIG. 21 illustrates a screen display for explaining adjusting an option (style) of the frame area 600 formed on a document page of an application operating on the electronic device, according to an embodiment of the present invention.

FIG. 21 illustrates a screen display of the electronic device 100 when the user adjusts the option (style) of the frame area 600 in which the internal or external data is displayed as described above. For example, the user may adjust the option (e.g. visual effect, rotation, frame, extension, and shrink) of the still/motion image displayed in the frame area or the shooting options (e.g. zooming, aspect ratio, visual effect, frame, and rotation) for preview image received from the camera module 170 and displayed in the frame area 600. According to embodiment of the present invention, the user may apply one option (style) selected among several options (stylus) to at least one portion of the frame area 600 or input by the user.

FIG. 21 may illustrate when the user performs an extension of the frame area 600 presenting the data of the still image as an option or zoom-in of the data of the preview image in the frame area 600 as a shooting option. Although FIG. 21 is directed to the latter case, the option adjustment may be applied to all the internal and external data that may be displayed in the frame area 600.

As shown in FIG. 21, the user may set the shooting options such as zoom, aspect ratio, and visual effect when the frame area 600 and the electronic device 100 may perform image processing for supporting the shooting with the application of at least one shooting option set by the user.

In embodiments of the present invention, the data presented in the frame area 600 may be zoomed in/out according to the user input. For example, the user may make a signal touch having a contact point within the frame area 600 and then drag the contact point upward to zoom in or downward to zoom out. The user may perform a multi-touch having two contact points within the frame area 600 and then pinch in/out to narrow or broaden the distance between contact points for zoom-out/in. The user may perform the zooming by performing a hovering gesture with a touch pen (e.g. stylus pen). Such a user input gesture may be used for various options aforementioned as well as zooming. In embodiments of the present invention, the option adjustments for the frame area 600 formed on the page 200 may be performed through various methods.

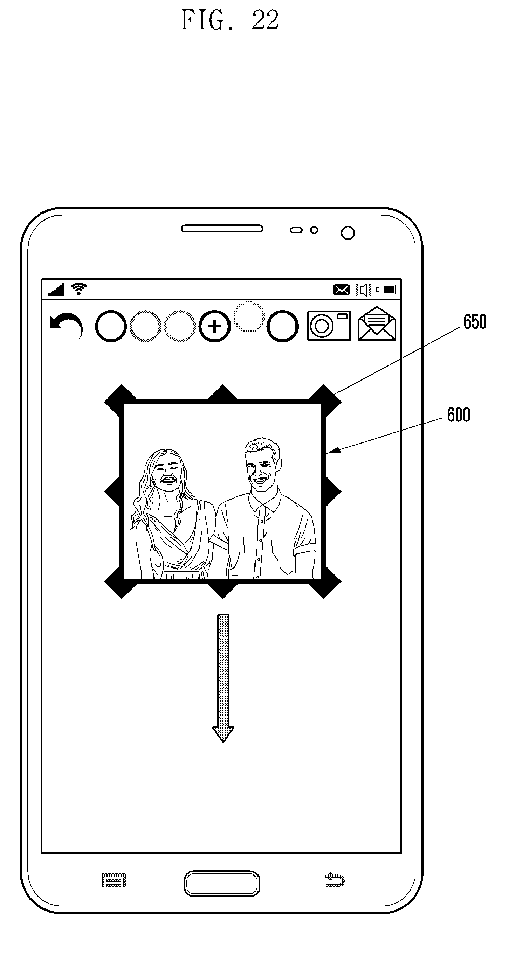

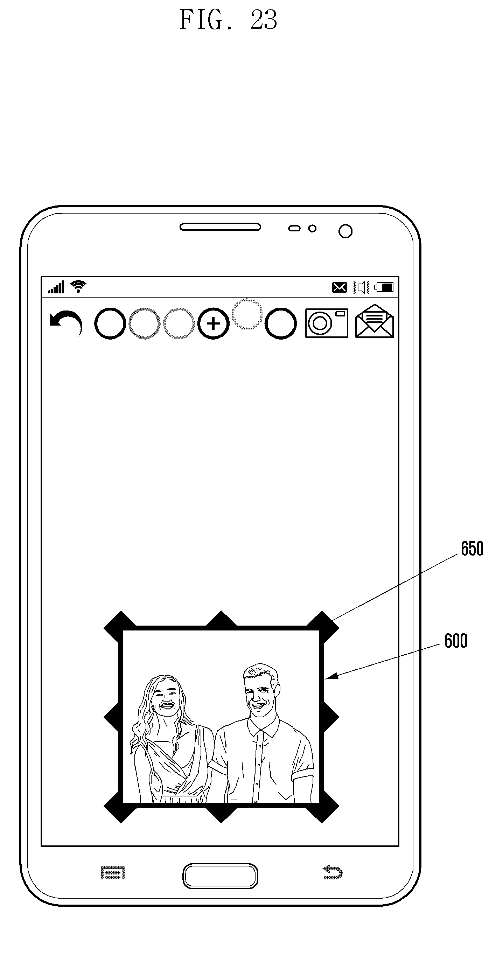

FIGs. 22 and 23 illustrate screen displays for explaining moving a frame area on the onscreen page of the electronic device, according to an embodiment of the present invention.

FIGs. 22 and 23 show the screen displays of the electronic device 100 when the user moves the frame area 600 when displaying data (e.g. couple image) on the onscreen page 200. The state of the frame area 600 displaying the data is before the corresponding data is inserted into the page 200; however, only the frame area 600 is active, as described above.

The user may select a portion of the boundary of the frame area 600, move the frame area downward while holding the selection, and release the selection at a certain position as shown in FIG. 22. For example, the user may drag the selected frame area 600 to a target position and then drop at the right position using a drag & drop touch gesture.

Then the electronic device 100 displays the frame area 600 at the position where the frame area 600 has been moved according to the user drag & drop touch gesture input. For example, the screen display of FIG. 22 may be changed to a new screen display reflecting the movement of the frame area 600 as shown in FIG. 23.

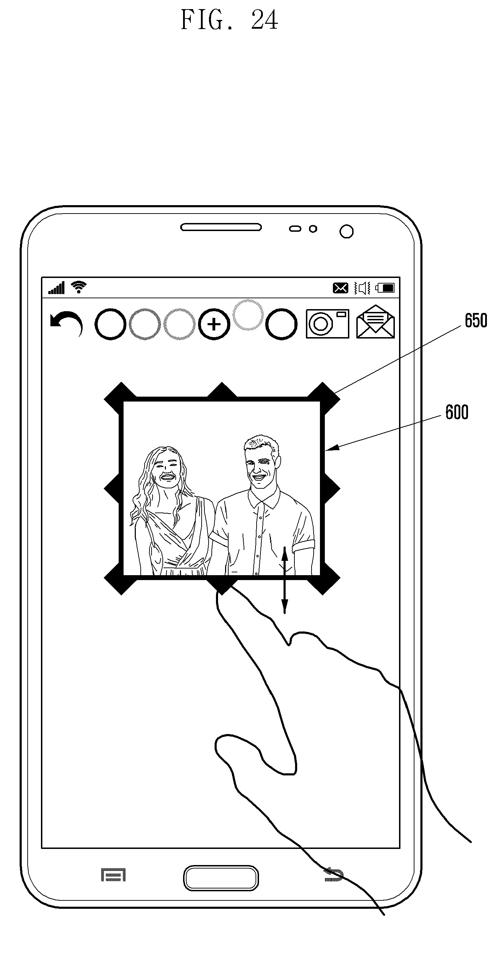

FIGs 24 to 26 illustrate screen displays for explaining adjusting a frame area formed on the onscreen image of the electronic device, according to an embodiment of the present invention.

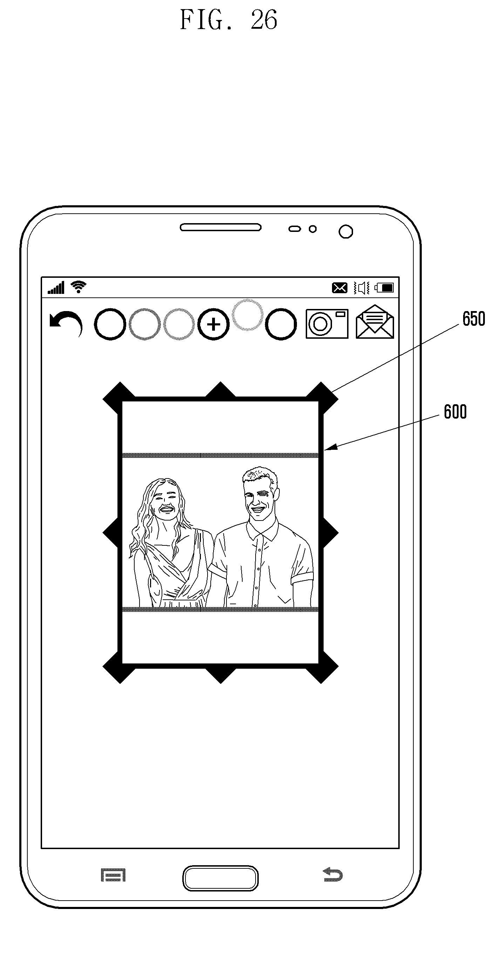

FIGs. 24 and 26 show the screen images of the electronic device 100 when the user adjusts the size of the frame area 600 when the frame area 600 is activated. The data displayed in the frame area 600 may be any of still and motion images acquired from inside and outside of the electronic device 100. The data displayed in the frame area 600 may be a preview image input through the camera module 170.

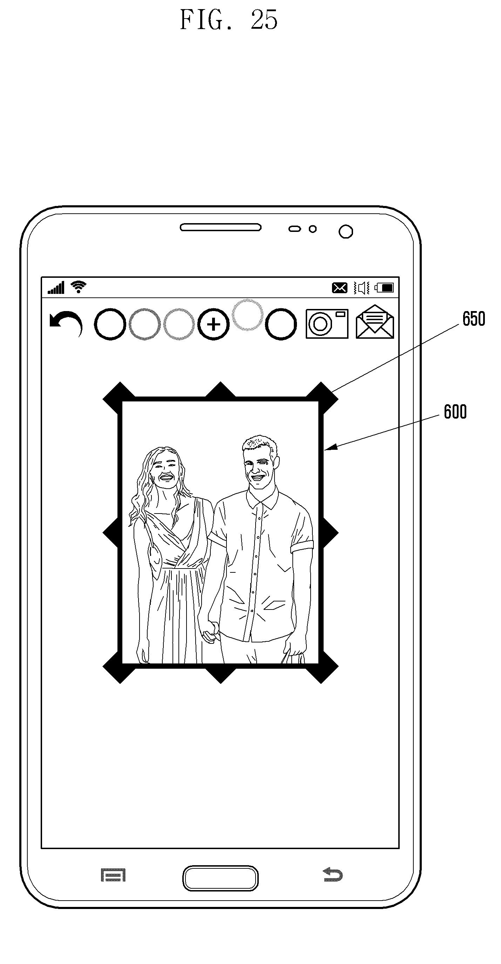

In embodiments of the present invention, the size adjustment of the frame area 600 may have different reactions according to whether the frame area 600 displays a still or motion image or a preview image. The distinct cases are described with reference to FIGs. 25 and 26, respectively. The depiction in FIG. 25 may be when the data displayed in the frame area 14 is the preview image, and the depiction in FIG. 26 may be when the data displayed in the frame area 600 is the still or motion image acquired from inside or outside of the electronic device 100.

As shown in FIG. 24, the user may select the adjustment mark 650 on the boundary line of the frame area 600, drag the adjustment mark 650 downward when maintaining the hold, and release the hold at a position to adjust the size of the frame area 600. For example, the user may select one of the adjustment marks 650 (e.g. the adjustment mark at the center of the bottom boundary line of the frame area 600), drag the selected adjustment mark downward when maintaining the hold, and drop the hold at a position to enlarge the size of the frame area 600.

The electronic device 100 displays the frame area 600 of which size has been adjusted (enlarged) in response to the size adjustment (enlargement) touch gesture of the user as shown in FIGs. 25 and 26. As aforementioned, the action reactive to the change of the size of the frame area 600 may be differentiated depending on the type of the data displayed in the frame area 600.

FIG. 25 is directed to when the data displayed in the frame area 600 is the preview image. In this case, the aspect ratio of the preview image may be changed according to the size adjustment of the frame area 600. For example, the subject shot by the camera module 170 may be further exposed as much as the extension of the frame area 600. For example, the screen display of the electronic device 100 as shown in FIG. 240 may be changed to the screen display as shown in FIG. 25 according to the user input for adjusting the size of the frame area.

FIG. 26 illustrates a screen display changed from the state of FIG. 24 When the data displayed in the frame area 600 is the still or motion image acquired from inside or outside of the electronic device 100. When the data displayed in the frame area 600 is the still or motion image, the aspect ratio of the data is adjusted in the frame area 600 according to the size adjustment of the frame area 600. For example, the corresponding data may be displayed at an aspect ratio matching the screen aspect ratio (e.g. 4:3, 16:9, and 16:10) or with a size in proportion to the size of the screen (e.g. 0.5x size, 1.0x size, 1.5x size, and 2.0x size) in correspondence to the change of the size of the frame area 600. For example, the screen of the electronic device 100 as shown in FIG. 24 may be changed to the screen as shown in FIG. 26 according to the user input for adjusting the size of the frame area 600. According to embodiments of the present invention, the aspect ratio or size of the data displayed in the frame area 600 is changed automatically in response to the change of the size of the frame area 600 (change in at least one of length and width).

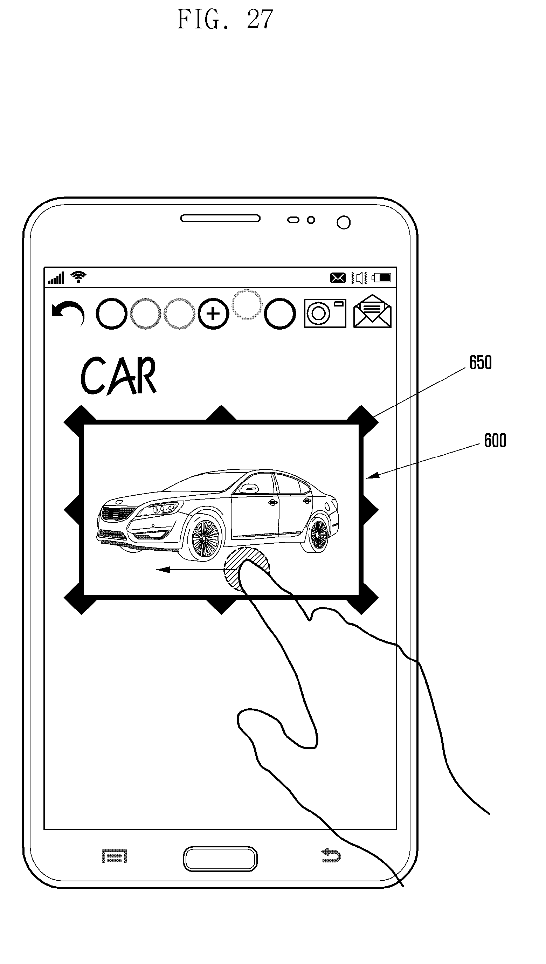

FIGs. 27 to 29 illustrate screen displays of the electronic device 100 for explaining scrolling the data displayed in the frame area 600, according to an embodiment of the present invention.

FIGs. 27 to 29 show the screen displays of the electronic device when the user scrolls the data displayed in the frame area 600 when the frame is activated on the page 200.

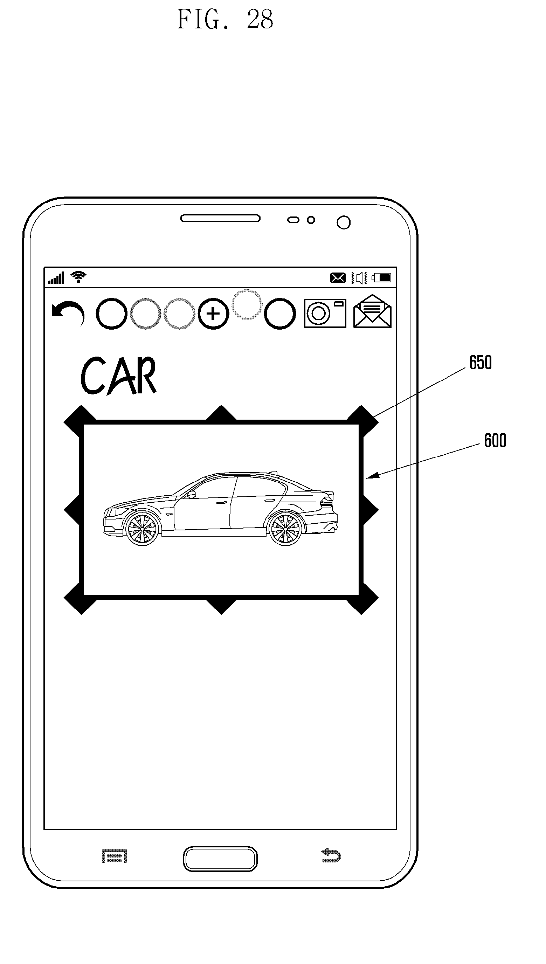

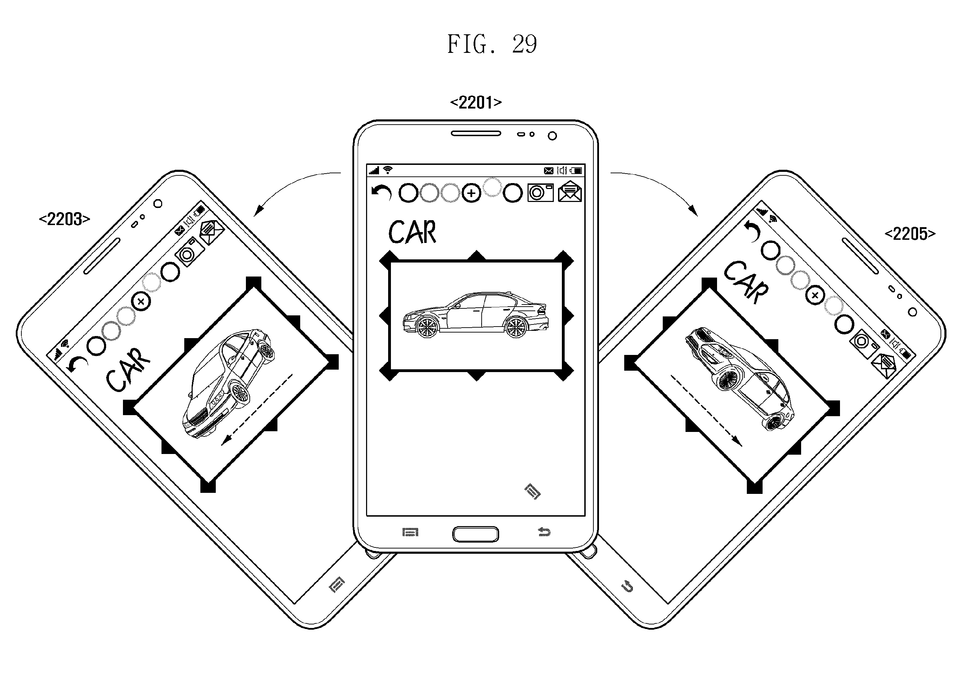

In embodiments of the present invention, the scroll of the data displayed in the frame area 600 may be performed by user's touch gesture (e.g. sweep, flick, and drag) as shown in FIGs. 27 and 28 or detection of the change in the posture of the electronic device by means of various sensors equipped to the electronic device 100 as shown in FIG. 29. The sensors may include a speech sensor, luminance sensor, acceleration sensor, and gyro sensor, and FIG. 29 may be directed to using a sensor capable of detecting the motion of the electronic device 100.

FIG. 27 shows the screen display of the state in which certain data (e.g. car image) acquired from the inside or the outside of the electronic device is displayed in the frame area. In FIG. 27, the user may make a scroll gesture to navigate (scroll) the data displayed in the frame area 600. For example, the user may make a touch and scroll gesture in the left or right on the frame area 600.

Then the electronic device 100 navigates the data in the frame area 600 in response to the user's scroll gesture, such that a navigated portion of the data is displayed in the frame are 600. For example, the data displayed in the frame area 600 may be replaced by previous data or next data, according to the direction of the user's scroll gesture.

Illustration 2201 of FIG. 29 may show the state of the screen displaying the specific data (e.g. car image) acquired from the inside or outside of the electronic device 100. In illustration 2201, the user may make a scroll gesture for navigating (scrolling) data displayed in the frame area 600. For example, the user may lean the electronic device 100 to the left or right direction, in which as the electronic device 100 is leaned to the left (see illustration 2203) or right (see illustration 2205) when the user is facing the display panel 131 of the electronic device. For example, the user may lean the electronic device 100 to the left as shown in illustration 2203 or to the right as shown in illustration 2205 while holding the electronic device 100 and facing the display screen of the electronic device 100.

Then the electronic device 100 processes the scroll operation on the data displayed in the frame area 600 in response to the user's scroll gesture as shown in illustration 2203 or 2205 such that the data is replaced by other data. For example, the current data displayed in the frame area 600 may be replaced by the previous data or the next data according to the direction of the user's scroll gesture.

As described with reference to FIGs. 27 to 29, if a scroll gesture is made on the data displayed in the frame area 600, the reaction is taken to the data displayed in the frame area 600 but not other objects on the onscreen page 200. According to embodiments of the present invention, the user input works to only the frame area 600 and the data displayed in the frame area 600 when the frame 600 is activated, in order to prevent an unintended user input from be made.

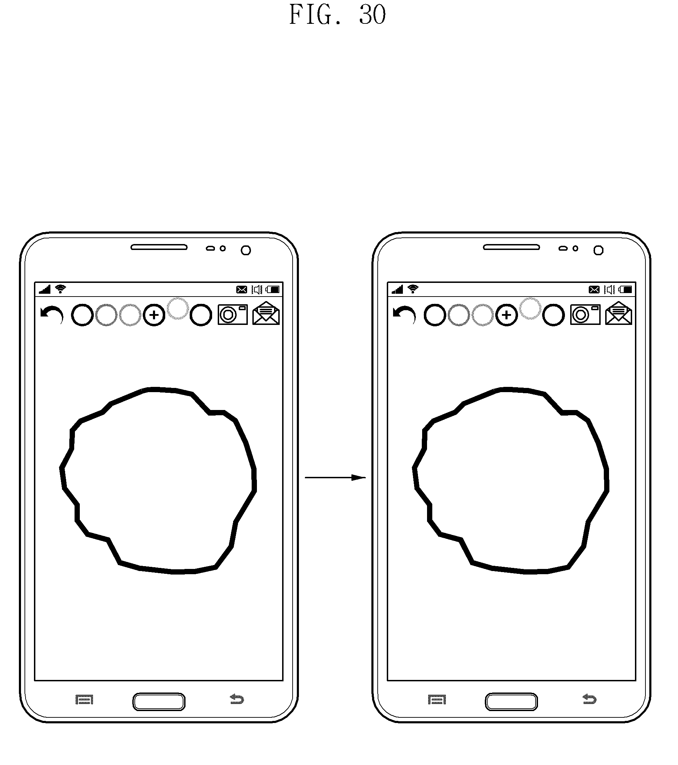

FIGs. 30 to 34 illustrate screen displays for explaining forming a frame area on the onscreen page of the electronic device, according to an embodiment of the present invention.

FIGs. 30 to 34 show the screen displays of forming a frame area 600 on the onscreen page 200 when the mode of the application is switched from the object input mode to the data input mode while the user is composing or editing a document page.

FIG. 30 illustrates creating the frame area 600 in a certain shape of a closed curve (e.g. rectangle, circle, star, and triangle). In particular, the frame area 600 is shaped atypically as drawn by the user. FIG. 30 is directed to forming the frame area 600 by reflecting the shape drawn by the user according to an embodiment of the present invention.

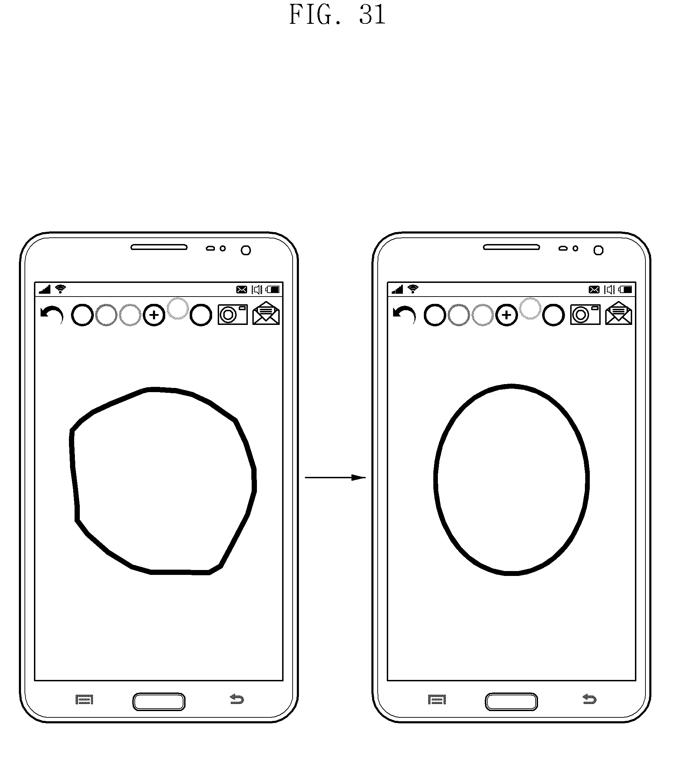

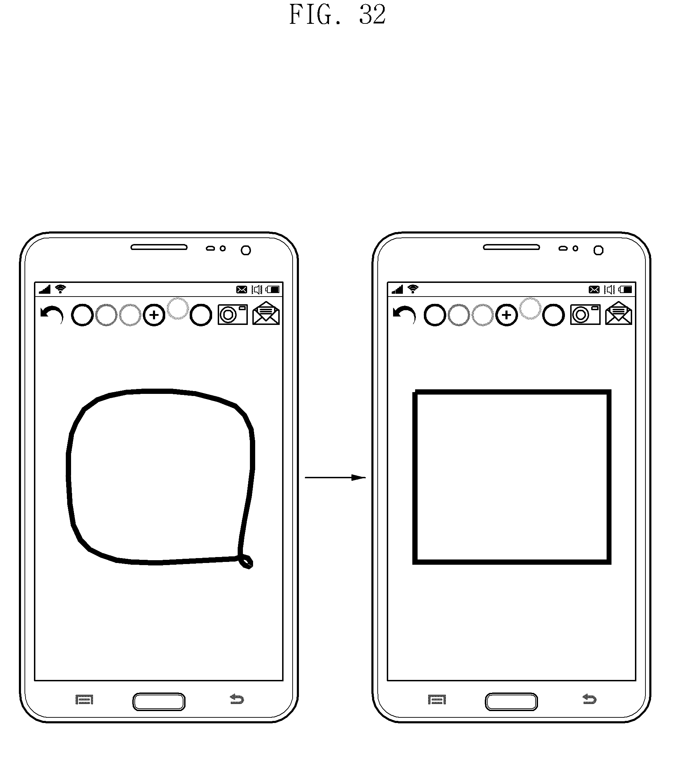

FIGs. 31 and 32 illustrate drawing a closed curve to generate a specific shape, and processing the atypical closed curve to form a specific shape of a frame area 600. FIGs. 31 and 32 are directed to recognizing a typical shape from the atypical curve drawn by the user to according to an embodiment of the present invention.

FIG. 31 is directed to when the atypical closed curve drawn by the user is recognized as a circular shape (circle and ellipse) to generate a circular frame area 600, and FIG. 32 is directed to when the atypical closed curve drawn by the user is recognized as a quadrangular shape (horizontal rectangle, vertical rectangle, and square) to generate a quadrangular frame area 600.

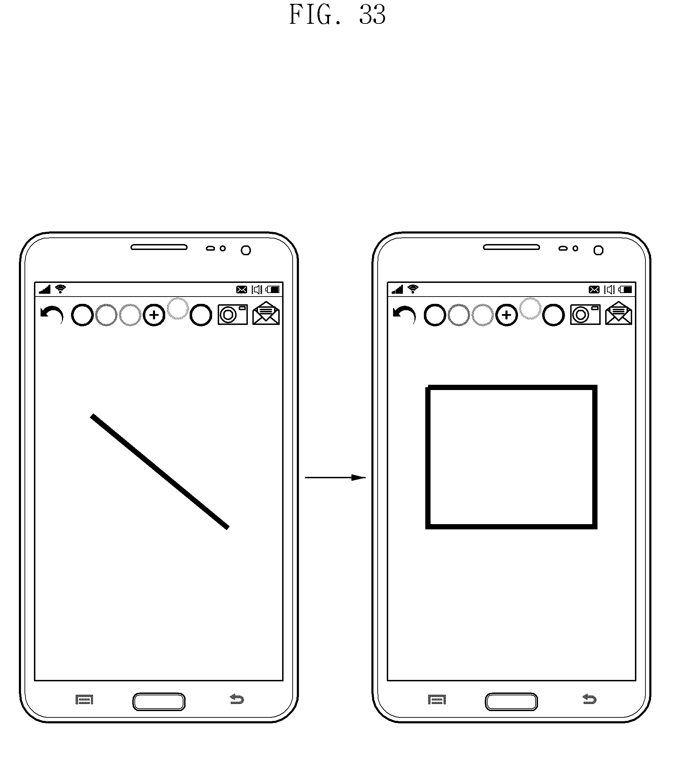

FIG. 33 is directed to when the frame area 600 is formed in response to a user's gesture of drawing a specific line (e.g. diagonal line, horizontal line, and vertical line) in consideration of the position and size of the frame area 600. In particular, the frame area 600 is formed in a typical shape of drawing lines connecting virtual angular points based on the line drawn by the user. In FIG. 33, the electronic device 100 determines the virtual angular points by recognizing the diagonal line and forms a quadrangular frame area 600 by connecting the virtual angular points on the onscreen page. The quadrangular shape (horizontal rectangle, vertical rectangle, and square) may be determined depending on the slope of the diagonal line.

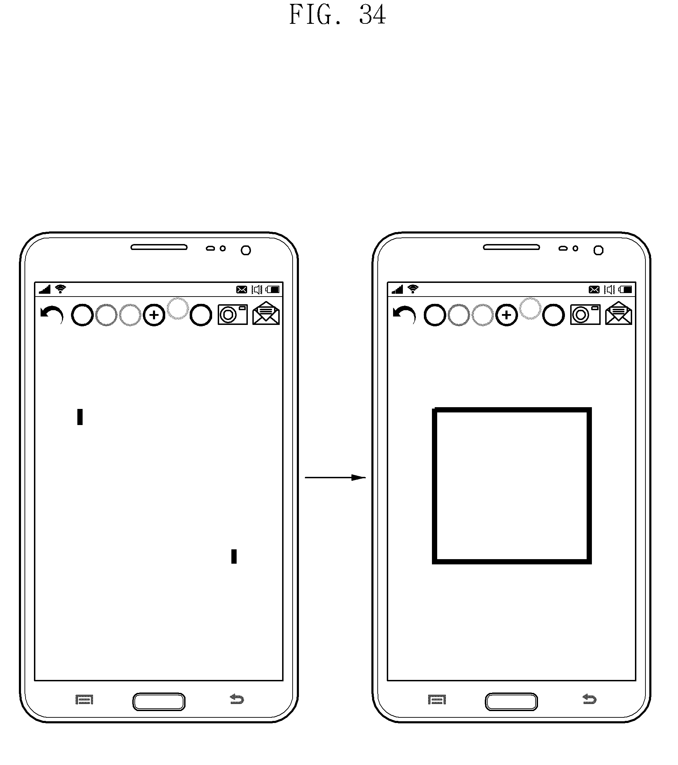

FIG. 34 is directed to when the frame area 600 is formed in response to selecting two points (based on multi-touch) defining the position and size of the frame area 600, in such a manner that the user selects two points and thus the electronic device 100 recognizes the selection area (e.g. by connecting angular points determined based on the two touch points to form a typical shape of frame area 600. In FIG. 34, the electronic device 100 recognizes the touch points of the multi-touch made by the user and creates a typical quadrangular shape frame area 600 corresponding to the size determined based on the touch points. The quadrangular shape (horizontal rectangle, vertical rectangle, and square) may be determined depending on the relative positions of two touch points (e.g. slope of the line connection the touch points of the multi-touch).

In embodiments of the present invention, the recognition of shape drawn by the user for forming the frame area 600 on the onscreen page may be performed using various diagram recognition algorithms. The user input gesture for forming the frame area may be made and detected on the touchscreen 130 according to various touch gesture recognition mechanisms, such as with a user's fingers(s) or a touch pen, in which pen case the touch gesture may be replaced by a hovering gesture.

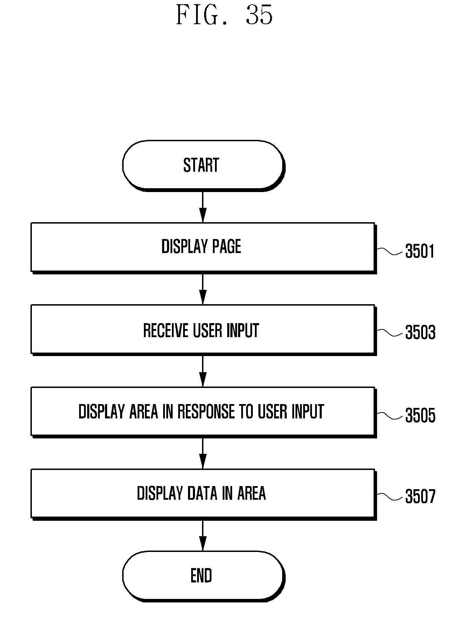

FIG. 35 illustrates a data processing method using a portion of the onscreen document page of an application operating on the electronic device, according to an embodiment of the present invention.

Referring to FIG. 35, the page display module 184 may control displaying a page for receiving a user input at step 3501. For example, the page display module 184 may execute the application requested by the user and control the display of the page screen of the application. In embodiments of the present invention, the page may receive the user input and present various data corresponding to the user input. The application may be any of the well known types of applications that allow for composing various types of documents (based on text and image) through an editable page.

The control unit 180 may detect a user input at step 3503. For example, the control unit 180 may detects a signal corresponding to the user input generated in the frame area 600 of the onscreen page. The signal corresponding to the user input may be generated with at least one user gesture.

The frame area display module 186 may control to display the frame area in correspondence to the user input at step 3505. For example, the frame area display module 186 may create the frame area 600 at a certain position in a certain size on the onscreen page in correspondence to the user input. In embodiment of the present invention, displaying the frame area 600 is performed in such a manner of forming an area determined according to at least one user gesture in a specified shape adjusted automatically. In embodiments of the present invention, displaying the frame area 600 may include acquiring data to be displayed in the frame area 600 in response to the signal detection. The data may include internal and external data, as described above. The data may include all the data stored in the memory functionally connected to the electronic device 100. For example, the data may include the data stored in the internal memory and the data received from the external memory connected to the electronic device 100 through the network 400.

The data display module 188 may control to display the data in the frame area 600 along with the display of the frame area 600 on the page at step 3507. For example, the data display module 188 may acquire the data to be displayed in the frame area in response to the signal detection, and display the acquired data in the frame area 600 as described above.

Although not shown in FIG. 35, the data display module 188 may control the data displayed in the frame area 600 in response to at least one user input when the data is displayed in the frame area 600 of the onscreen page. When controlling the data displayed in the frame area 600, the control unit 180 may check distinct user inputs on the page to restrict a portion of the input. The control unit 180 also may control to display at least one menu (e.g. option selection menu) specific to the function for controlling the data displayed in the frame area 600 on the frame area 600 or another area of the page.

The displaying the data may include displaying the data (e.g. object) on the page in response to the user input, changing at least one of the size and position of the frame area 600 according to at least one user input, and applying at least one style selected among several styles or input by the user.

The frame area 600 may be divided into various sub-areas in response to a user input. Displaying the frame area 600 may also include displaying various sub-areas including a first subarea and a second subarea. The data may be composed of various data including first data and second data at least in correspondence to the subareas, and displaying the data may include displaying the first data in the first subarea and the second data in the second subarea.

In embodiments of the present invention, the first data being received from one of first and second image sensors functionally connected to the electronic device 100, and the second data being received from another image sensor except the sensor which received the first data. For example, among the first image sensor (e.g. rear camera module) and the second image sensor (e.g. front camera module) of the camera module 170 functionally connected to the electronic device 100, the first data is acquired through the first image sensor, and the second data is acquired through the second image sensor connected to the electronic device 100.

In embodiments of the present invention, the frame area 600 may include various subareas, and the data displayed in one subarea selected among the plurality subareas may be stored.

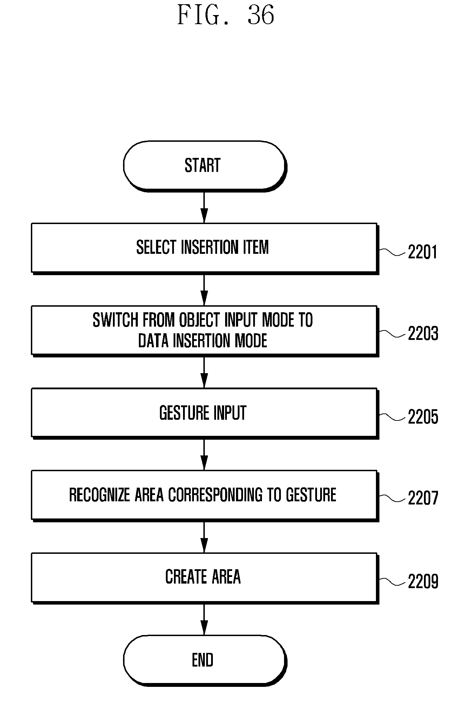

FIG. 36 illustrates a procedure of generating a frame area on the onscreen page of the electronic device in the data processing method, according to an embodiment of the present invention.

Referring to FIG 36, the data display module 188 may detect selecting the insertion item 213 in the item area 210 when executing an application and performing a related step at step 2201. For example, the user may select the insertion item 213 among option items in the item area 210 to insert data into the onscreen page while composing a document in the object input mode provided with the execution of the application.

If the insertion item 213 is selected, the data display module 188 may control to switch from the object input mode to the data insertion mode at step 2203. For example, the data display module 188 may switch the object input mode for receiving an object to a data insertion mode for inserting data, and then wait for user input for generating the frame area 600.

If a user's gesture input for generating the frame area 600 is detected at step 2205 after the entry to the data insertion mode, the frame area display module 186 may recognize the frame area 60 in correspondence to the user's gesture at step 2207. The control unit 180 may control to generate the frame area 600 on the onscreen page, according to the user's gesture at step 2209.

For example, the user may determine the position and size of the internal or external data to be inserted on the page and make a drawing gesture to form the frame area 600. Then the frame area display module 186 recognizes the area drawn in accordance to the user's gesture, as described above, and forms the frame area 600 corresponding to the drawn area. In embodiments of the present invention, forming the frame area 600 is performed in such a manner of creating the atypical or typical shape of the frame area 600 according to the user configuration. The data display module 188 may control the camera module 170 to operate on the background when switching to the data insertion mode or detecting the user's gesture input. The control unit 180 also may control to display the subject's data (preview image) input through the camera module 170 in the frame area 600 as a preview.

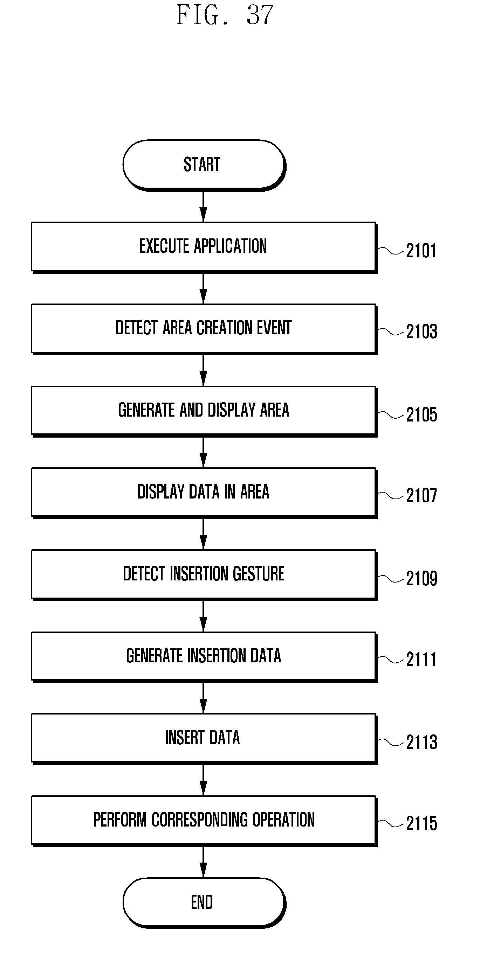

FIG. 37 illustrates a procedure of inserting the data into the onscreen page of a document application of the electronic device in the data processing method, according to an embodiment of the present invention.

Referring to FIG. 37, the page display module 184 may execute the application and control the application to perform the related operations at step 2101. For example, the page display module 184 may execute the application requested by the user and control to display a document page of the application on the screen. The control unit 180 may operate in the object input mode, when the application is executed, and wait for a touch gesture of the user in the object input mode.

In embodiments of the present invention, the touch gesture may be the input gesture for writing the object (keypad-based text, writing-based text, and diagram, etc.), selecting the edit item 211 among the options items provided in the item area 210, or selecting the sharing item 215 for sharing (transmitting) the written document with (to) other devices. The application may be any type capable of generating an editable document (text and image-based document) such as word processor, memo, email, message, and travel organizer applications.

The frame area display module 186 may detect a user gesture for forming the frame area 600 in the object input mode of the application at step 2103. For example, the user may determine the position and size of an area for inserting specific data on the onscreen page 200 in the object input mode. The user may draw a diagram having the determined position and size on the page to designate the frame area 600. The user may select the insertion item 213 before making the user gesture in order to switch from the object input mode to the data insertion mode.

The frame area display module 186 may create the frame area 600 in response to the user's gesture input on the onscreen page 200 (e.g. document currently being composed) and display the frame area 600 on the page 200. In embodiments of the present invention, displaying the frame area 600 may include acquiring the data to be displayed in the frame area 600, and the data may include the internal and external data as described above. The data may include all the types of data stored in the memory connected to the electronic device 100 functionally.

For example, the data may include the data stored in the internal memory and the data received from an external memory connected through the network 400. In embodiments of the present invention, when the data is acquired from the camera module 170, the control unit 180 may control the camera module 170 to operate on the background in creating the frame area 600 in response to the user's gesture input and then acquire the subject's data (preview image).

The data display module 188 may display the acquired internal or external data in the frame area 600 formed on the onscreen page 20 as a preview at step 2107. For example, the data display module 188 may control such that specific data is displayed in the frame area 600 having the position and size determined by the user's gesture input.

The data display module 188 may control such that the data is displayed in the frame area 600 in response to at least one user's gesture input. The control unit 180 may differentiate the user's inputs to restrict some user's input. The control unit 180 also may control to display at least one menu (e.g. option selection menu) corresponding to the function for controlling the data in the frame area 600 or a predetermined area on the page 200.

The frame area display module 186 may change at least one of the size and position of the frame area according to at least one user's input made when the data is displayed in the frame area 600. The control unit 180 also may apply at least one style selected among various styles or selected by the user's input to at least a portion of the frame area 600 when the data is displayed in the frame area 600.

The frame area display module 186 may display the frame area 600 as divided into various subareas in response to the user's input when the data is displayed in the frame area 600. Displaying the data in the frame area 600 may include displaying the various sub-areas including at least the first and second subareas. The data may include at least first and second data in correspondence to the subareas constituting the frame area 600, and displaying the data in the frame area 600 may include displaying the first data at the first subarea and the second data at the second-sub area.

The data display module 188 may detect the insertion event when the data is displayed in the frame area 600 at step 2109. For example, the control unit 180 may detect the user's input gesture for commanding to convert the data displayed in the frame area 600 into the insertion data and insert the insertion data on the page 200. For example, the insertion command may be input as a touch gesture (e.g. tap) or by manipulating the input unit 120.

The data display module 188 may generate the insertion data in response to the insertion command at step 2111 and inserts the insertion data on the onscreen page 200 of the document currently being composed at step 2113. For example, the data display module 188 may control to generate the insertion data equal in size to the frame area 600 and display the inserted data at the same position as the frame area 600 on the page 200. The page display module 184 may switch the mode to the object input mode or maintain the data input mode according to a preconfigured setting, and wait for a user input.

The control unit 180 may perform an operation corresponding to the user's request when the insertion data is inserted on the corresponding page 200 at step 2115. For example, the control unit 180 may insert additional data (e.g. object) onto the inserted data in response to the user input, generate a new frame area 600 to add the additional data in response to the area insertion command, store and end of the composed document with the corresponding page in response to the user request, or transmit (share) the composed document with the corresponding page to the outside of the electronic device 100 in response to the user request, when the data is inserted in the page 200.

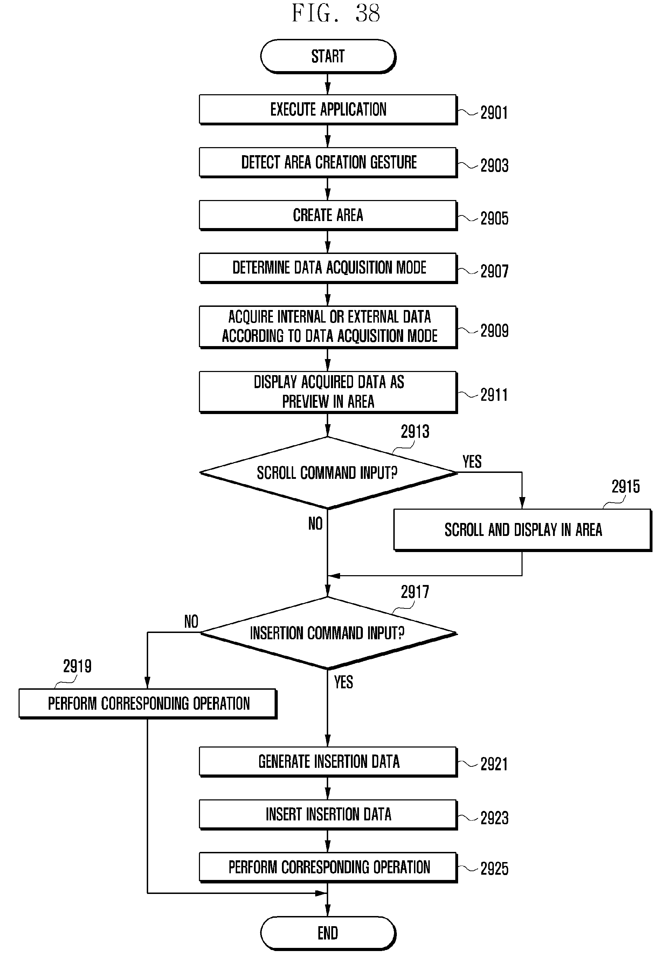

FIG. 38 illustrates a data processing method using a frame area on the onscreen page of the electronic device, according to an embodiment of the present invention.

Referring to FIG. 38, the page display module 184 may execute the application and operations of the application at step 2901. For example, the page display module 184 may execute the application requested by the user and display the application-specific page screen.

The frame area display module 186 may detect a user input for creating the frame area 600 at step 2903. For example, the user may determine the position and size of the area for inserting specific data on the page and make a drawing gesture for designating the frame area 600 at the determined position with the determined size on the page 200.

The frame area display module 186 may create the frame area 600 and display the frame area 600 on the page in response to the user input at step 2905.

The frame area display module 186 may determine a data acquisition mode when displaying the frame area 600 at step 2907. In embodiments of the present invention, displaying the frame area 600 may include acquiring the data to be displayed in the frame area 600, and the data may include the internal and/or external data.

The data display module 188 may acquire the internal or external data according to the determined data acquisition mode at step 2909. For example, the data display module 188 may acquire the data stored in the memory functionally connected to the electronic device 100 according to the data acquisition mode. The control unit 180 may acquire the data stored in the internal memory or the external memory connected through the network 400. The control unit 180 may control the camera module 170 to operate on the background and acquire the subject's data (preview image) input through the camera module 170.

The data display module 188 may display the acquired internal or external data in the frame area 600 as a preview at step 2911. For example, the control unit 180 may control specific data in the frame area 600 having the position and size determined according to the user's gesture input on the page 200 of the document currently being composed at step 2911.
The data display module 188 may monitor to detect a user input and, if a user input is detected, determine whether any user input is a scroll command for scrolling the data displayed in the frame area 600 at step 2913

If the user input is the scroll command, the data display module 188 may scroll the data in the frame area 600 and display the scrolled data in response to the user's scroll command input at step 2915. If the user input is not the scroll command input, the data display module 188 may determine whether the user input is an insertion command input at step 2917.

If the user input is not the insertion command, the control unit 180 may perform the step corresponding to the user input at step 2919. For example, the data display module 188 may input an object on the page in response to the user input, or change the data input method.

If the user input is the insertion command, the data display module 188 may generate insertion data at step 2921. For example, the control unit may detect an insertion command input when the data is displayed in the frame area 600 and convert the data displayed in the frame area 600 as the insertion data to be inserted on the page.

The data display module 188 may insert the created insertion data on the onscreen page of the document currently being composed at step 2923. For example, the control unit 180 may generate the insertion data equal in size to the frame area 600 and insert the insertion data at the same area (position) as the frame area 600.

If the user input is not the scroll command, the control unit 180 may perform an operation corresponding to the user input at step 2925. For example, the control unit 180 may switch from the data insertion mode to the object input mode for inserting the insertion data on the onscreen page, form a new frame area 600 in response to a user input, or display an object on the page in response to the user input.

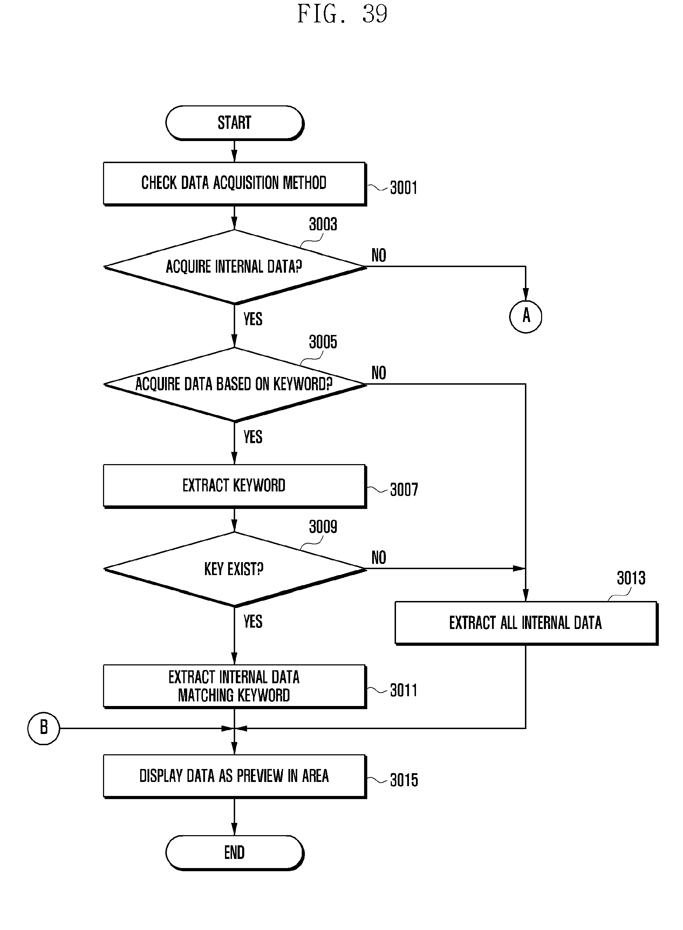

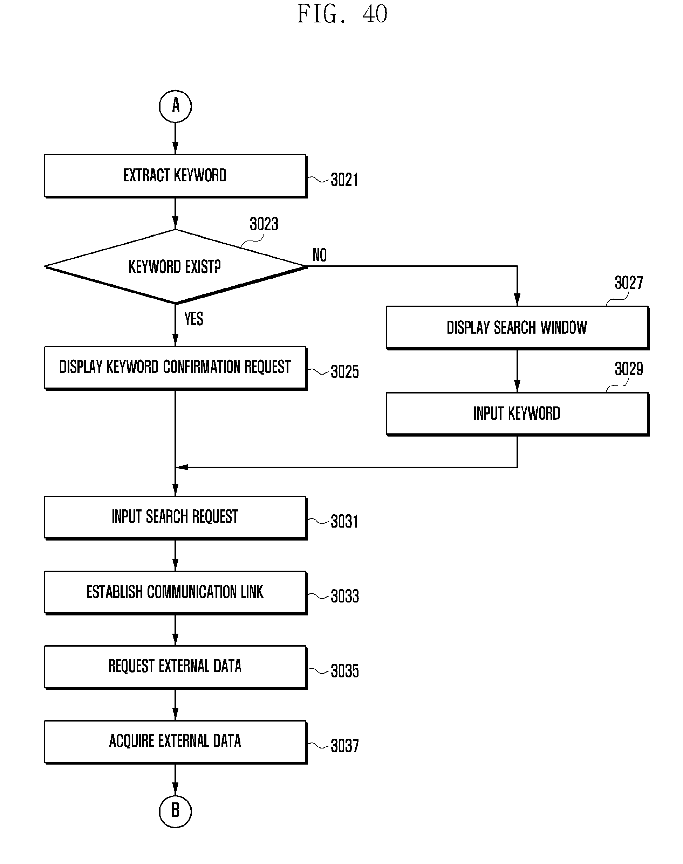

FIGs. 39 and 40 illustrate a procedure of displaying data in the frame area formed on the onscreen page of the electronic device 100 in the data processing method, according to an embodiment of the present invention.

Referring to FIGs. 39 and 40, the frame area display module 186 may check the data acquisition mode at step 3001. For example, the frame area display module 186 may check the data acquisition mode predetermined when displaying the frame area 600 on the onscreen page.

The frame area display module 186 may determine whether the data acquisition mode is an internal data acquisition mode at step 3003. If the data acquisition mode is the internal data acquisition mode, the frame area display module 186 determines whether the internal data acquisition mode is keyword-based internal data acquisition mode at step 3005.

If the internal data acquisition mode is not the keyword-based internal data acquisition mode, the data display module 188 may acquire all the internal data at step 3013 and display the acquired data in the frame area 600 on the page as a preview.

If the internal data acquisition mode is the keyword-based data acquisition mode, the data display module 188 extracts the keyword at step 3007. For example, the control unit 180 may analyze the object on the page to extract a keyword.

The data display module 188 determines whether there is any keyword on the page at step 3009. If there is no keyword on the page, the data display module 188 controls to acquire all the internal data at step 3013 and displays the acquired internal data in the frame area 600 as a preview at step 3015.

If there is any keyword on the page, the data display module 188 may extract to acquire the internal data matching the keyword at step 3011. The control unit 180 may prompt the user to enter whether to perform keyword-based search (e.g. whether the extracted keyword is correct). If the user request is for keyword-based search, the control unit 180 retrieves the internal data matching the corresponding keyword. According to an embodiment of the present invention, if a user input requesting for keyword-based search is received, the control unit 180 may retrieve the internal data matching the keyword. The control unit 180 may control such that the retrieved internal data is displayed in the frame area 600 on the page as a preview.

If the data acquisition mode is not the internal data acquisition mode (i.e. if the data acquisition mode is the external data acquisition mode) at step 3003, the control unit 180 may extract a keyword at step 3021. For example, the control unit 180 may analyze the object on the page to extract a keyword.

The data display module 188 may determine whether there is any keyword on the page at step 3023. If there is any keyword on the page, the control unit 180 may prompt the user to check whether the corresponding keyword is correct as a popup message. The popup message may inquire whether to perform data search with the extracted keyword.

If there is no keyword in the page, the control unit 180 may control to display a search window at step 3027. For example, the control unit 180 may display a search window prompting the user to enter a keyword to search for external data. The control unit 180 may receive the keyword entered by the user through the search window at step 3029.

At step 3031, the control unit 180 may receive the user input requesting for search with the keyword confirmed at step 3025 or entered at step 3029.

The control unit 180 may control to establish a communication link in response to the search request of the user at step 3033. For example, the control unit 180 may activate a communication module capable of communication with the data source (e.g. external server) for acquiring the external data, and establish a connection to the data source through the network 400.

The control unit 180 may request the connected data source (e.g. external server) for the external data matching the keyword confirmed by the user at step 3035. The control unit 180 may receive the external data from the data source through the network at step 3037. The control unit 180 may control to display the received external data in the frame area 600 on the page as a preview.

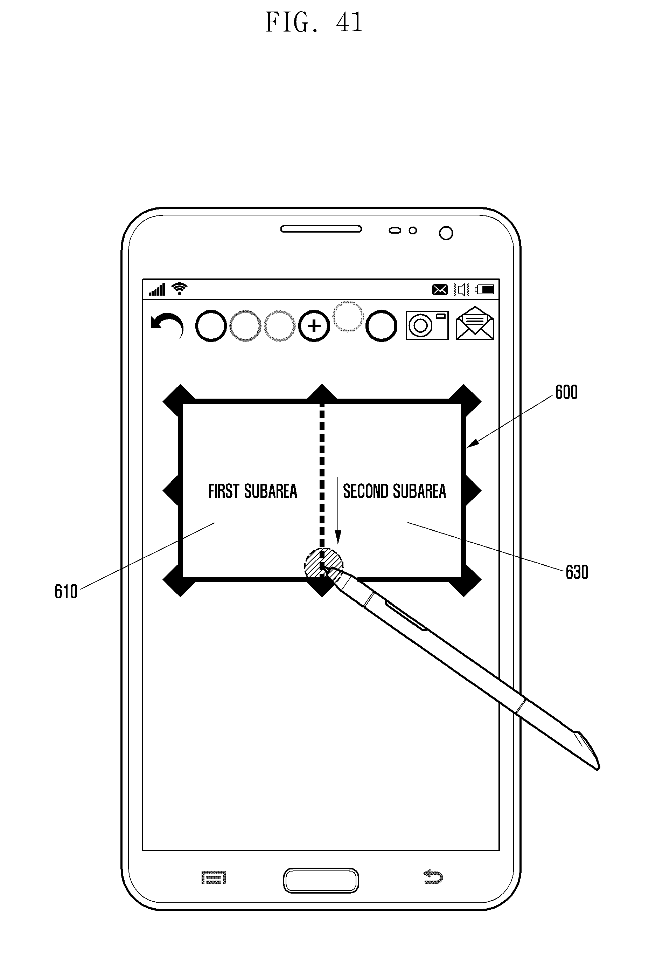

FIGs. 41 to 45 illustrate screen displays for explaining splitting a frame area formed on the ongoing page of the electronic device, according to an embodiment of the present invention.

FIG. 41 illustrates a screen display when the frame area 600 activated on the page is split into the first subarea 610 and the second subarea 630. For example, the user may execute an application and control the application to generate the frame area 600 with a gesture. According to an embodiment of the present invention, the frame area 600 may display the internal or external data acquired from an internal or external memory functionally connected to the electronic device 100.

The user may make a gesture (split command) for splitting the frame area 600 into at least two subareas. The split command may be input with a gesture of splitting the frame area 600 in a vertical, horizontal, or diagonal direction, and distinguished from the input for adjusting the option (or style) of the data in the frame area 600. FIG. 41 is directed to when the frame area 600 is split horizontally according to the split command.

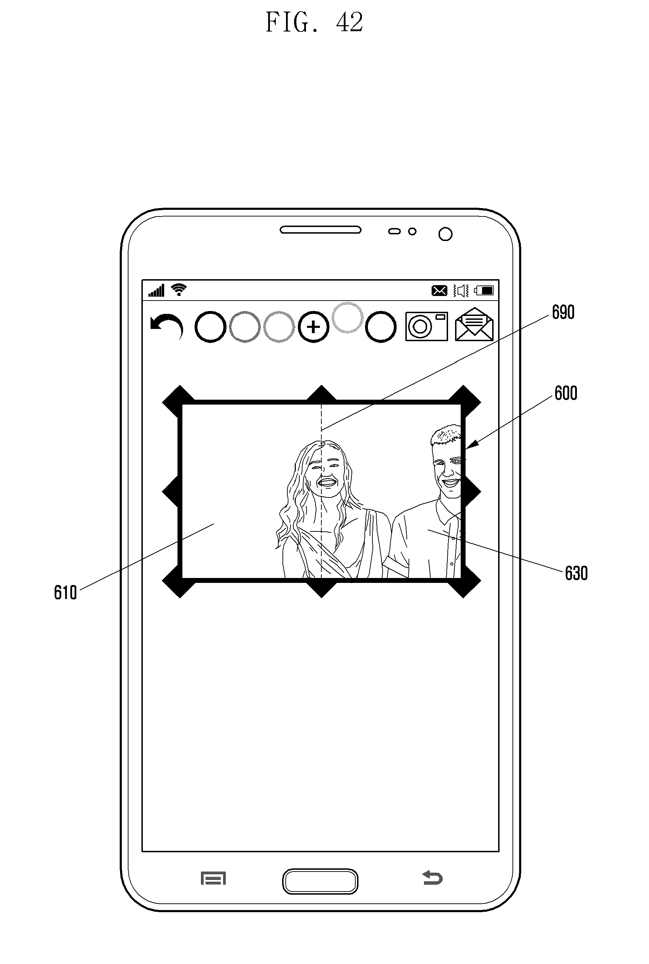

The frame area 600 is split into two subareas as shown in FIG. 41, and the two subareas are utilized as shown in FIGs. 42 to 44.

FIG. 42 illustrates a screen display when the frame area 600 is activated on the onscreen page of the document created by the application executed in response to the user request. FIG. 41 is directed to when the frame area 600 is horizontally split into two subareas 610 and 630. Although a split line 690 is drawn to indicate the split of the frame area 600 intuitively, the split line 690 may be shown or hidden according to the user configuration. The split line 690 may be drawn with the aims of fulfilling the intuitiveness such as color (e.g. red, blue, and yellow), color depth, and pattern (dotted line and solid line) without hiding the data. As shown in FIG. 42, although the user split the frame area 600, only one piece of data is displayed in the frame are 600 as a preview.

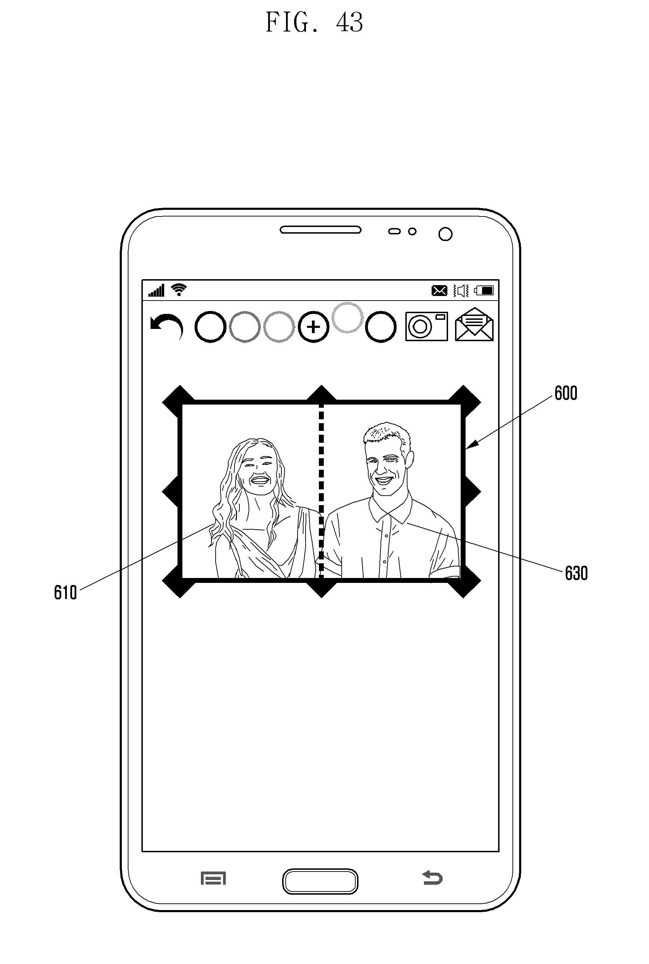

The user may input an insertion command for selecting one of the two split subareas of the frame area 600 (e.g. first subarea 610) and insert the first data (e.g. the data displayed in the frame area 600 into the selected subarea. The electronic device 100 saves the first data and displays the first data in the first subarea 610 of the frame area 600 in response to the user's input command. The second subarea 630 of the frame area 600 may continue displaying the data as a preview, as in FIG. 43.

FIG. 43 illustrates a screen display of the electronic device 100 when the user makes an insertion command input through the first subarea 610 in the screen state of FIG. 42. The screen display of the electronic device 100 as shown in FIG. 42 may be changed as shown in FIG. 43 according to the user's insertion command input using the split subareas. Since the first data is not yet inserted into the page in the screen state of FIG. 43, the frame area 600 may be in the active state, that being when the electronic device is in the data input mode.

As shown in FIG. 43, the first subarea 610 may display the first data requested for insertion, and the second subarea 630 may display the acquired data, e.g. the data being displayed in the frame area 600 (hereinafter, second data). In FIG. 43, the user input to the first area of the first subarea 610 of the frame area 600 may be restricted, and the control unit 180 may control the second data (e.g. scroll and option adjustment) in response to the user input to the second data displayed in the second sub area 630.

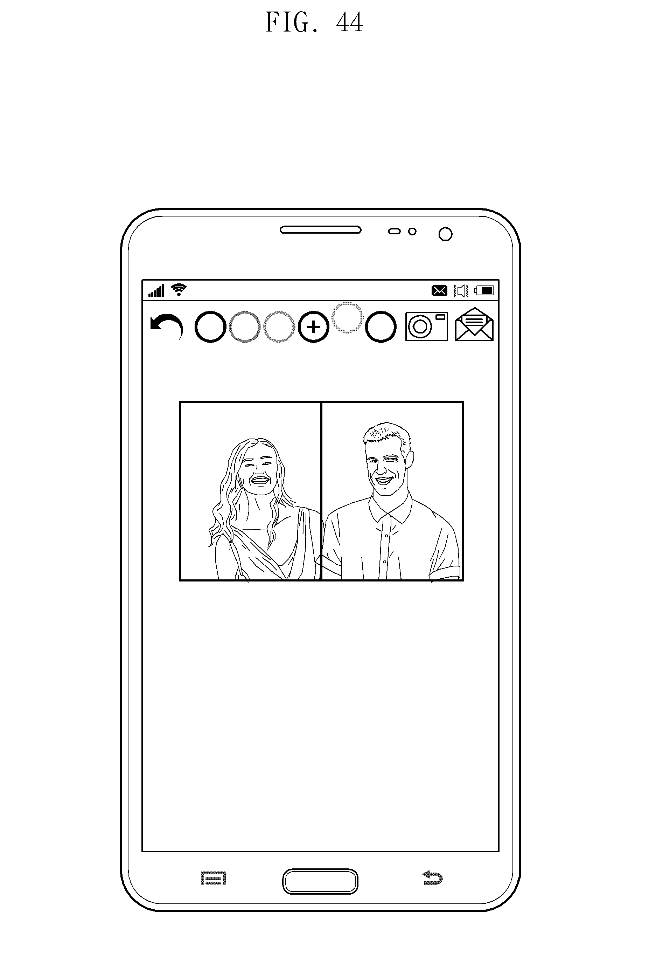

In FIG. 43, the user may input an insertion command for storing the second data displayed in the second subarea 630 as a preview. The electronic device 100 stores the second data in response to the user's insertion command and displays the second data in the second subarea 630 of the frame area 600. If the data corresponding to all split subareas of the frame area 600 are stored, the electronic device 100 processes the temporal data (e.g. first and second data) for the respective subareas to generate the insertion data and inserts the insertion data into the corresponding page, as in FIG. 44.

FIG. 44 illustrates a screen display of the electronic device 100 when the user makes an insertion command input through the second subarea 630. For example, the screen display of the electronic device 100 as shown in FIG. 43 may be changed as shown in FIG. 44 according to the insertion command input made to all the subareas. Since the screen display of FIG. 44 corresponds to the inserting of the insertion data into the page, FIG. 44 may show the screen display when the frame area 600 is deactivated, e.g. the device is operating in the object input mode.

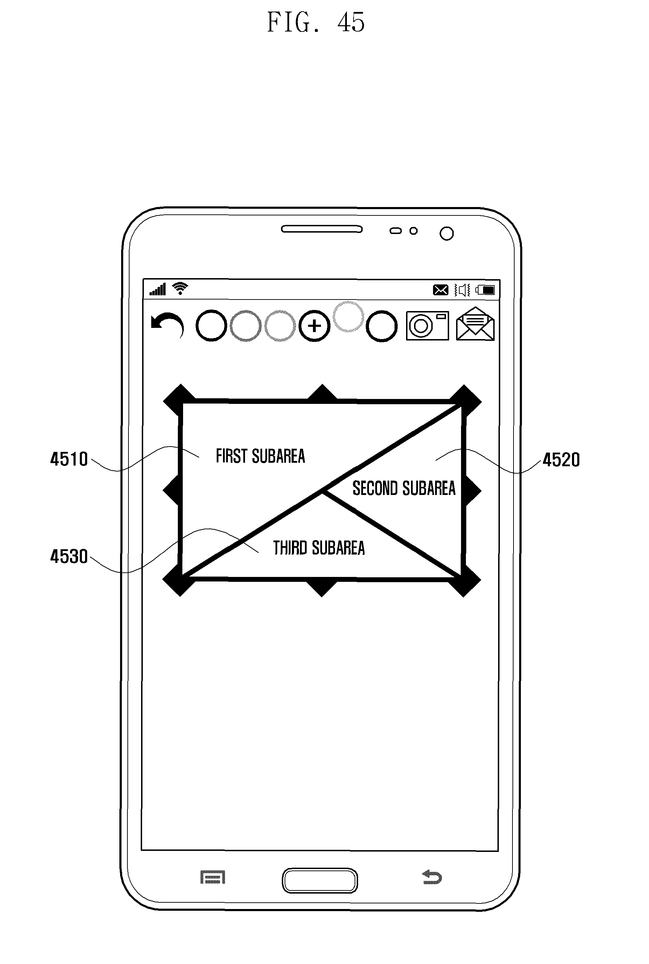

Although FIGs. 41 to 44 are directed to when the frame area 600 is split into two subareas 610 and 630, the present invention is not limited thereto, and may be embodied with various modifications. That is, the frame area 600 may be split into three non-symmetrical areas (i.e. first subarea 4510, second subarea 4520, and third subarea 4530) as shown in FIG. 45. The split of the frame area 600 is not limited in number of subareas, and the subareas are not fixed in layout. However, the split of the frame area 600 is restricted to fulfill the condition of securing the visibility in consideration of the screen size of the electronic device.

As described with reference to FIGs. 41 to 45, the user may split the frame area 600 into at least two subareas in various layouts, and insert different data into the page as combined into one piece of data according to an embodiment of the present invention. It is possible herein to perform a split shot through the split subareas. The user may combine the various preview images corresponding to the layout of the frame area 600 split for split shot into a single piece of insertion data. The electronic device 100 may support an image processing function for the split shot using the frame area 600.

According to embodiments of the present invention, the frame area may be split into various subareas according to the user input. The data processing method may include splitting the frame area 600 input various subareas including the first and second subareas. The data also may be split into various data including at least the first and second data in correspondence to the subareas. In splitting the frame area 600, the data displayed in the respective subareas of the frame area 600 may be different from each other, and the different data may be combined into a single piece of data to be inserted into the page.

When the frame area 600 is split into the first and second subareas 610 and 630, the first data may be displayed in the first subarea 610 and the second data in the second subarea 630. When the frame area 600 is split into the first to third subareas 4510, 4520, and 4530, the first data may be displayed in the first subarea 4510, the second data in the second subarea 4520, and the third data in the third subarea 4530.

In embodiments of the present invention, the data acquired for the respective split subareas may be identical or different from each other, as described with reference to Table 1.

**Table 1**

| data | subarea |
|---|---|
| First data | First subarea |
| Second data | Second subarea |
| Third data | Third subarea |

Table 1 is directed to when the frame area 600 is split into three subareas and three pieces of data are stored for the three subareas. As shown in Table 1, the first to third data is mapped to the first to third subareas, and may be identical to or different from each other.

For example, the first to third data may be processed to generate the same data as the data displayed in the frame area 600 and displayed in different forms according to the shapes of the split subareas. The first to third data may be the different internal data acquired in response to the insertion command inputs made on different data or the internal, external, and shot data acquired from different memories. When the frame area 600 is split into various subareas, the insertion data may be generated in various data combinations.

In embodiments of the present invention, the first data may be acquired from one image sensor of the first image sensor (e.g. rear camera module) of the camera module 170 functionally connected to the electronic device 100 and the second data may be acquired from the other image sensor of the first and second images sensors connected to the electronic device 100. The third data may be received from the external memory through the network 400.

In embodiments of the present invention, the frame area 600 may include various subareas. If one of the subareas is selected, the data displayed in the selected subarea is stored. For example, the control unit 180 acquires the first data input from the first image sensor in selection of the first subarea, the second data in selection of the second subarea, and the third data in selection of the third subarea. Once the data for the all the subareas is acquired, the control unit 180 combines the first to third data and inserts the combined data into the corresponding page.

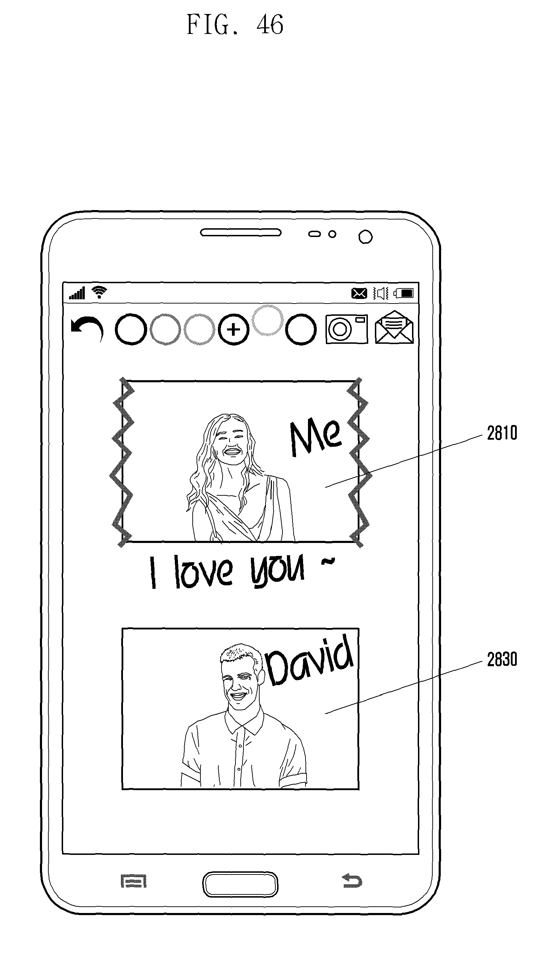

FIG. 46 illustrates a screen display for explaining insertion of various data on the onscreen page of the electronic device in the data processing method, according to an embodiment of the present invention.

FIG. 46 illustrates a screen display of the electronic device 100 when the user executes the application and inserts various data into the page using the frame area 600.

In the screen display of FIG. 46, the user activates the frame area 600 in composing a document to insert specific data 2810 into the onscreen page and then reactivates the frame area 600 to insert another specific data 2830 into the page. According to embodiments of the present invention, the user may conveniently and quickly insert data several times on the ongoing page of the document of the currently operating application, and at the user intended position with user intended size and layout, without complex operations.

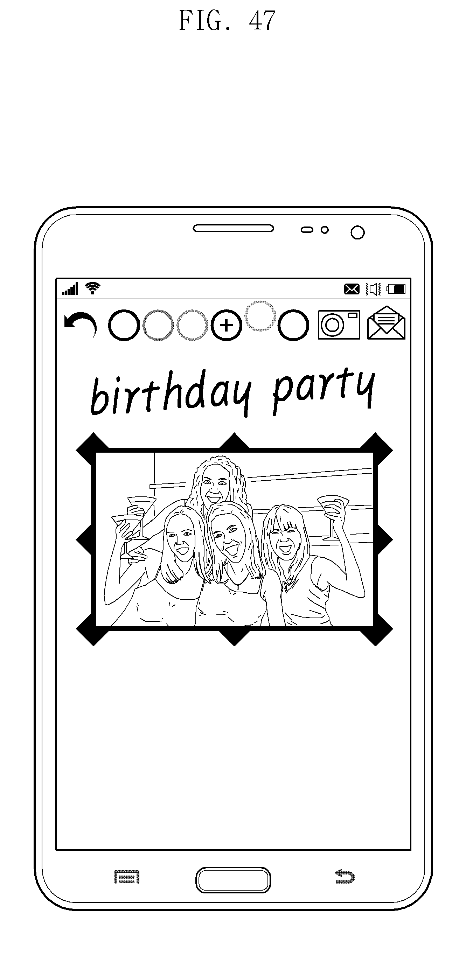

FIGs. 47 to 49 illustrate screen displays for explaining inserting motion image data on the onscreen page of the electronic device, according to an embodiment of the present invention.

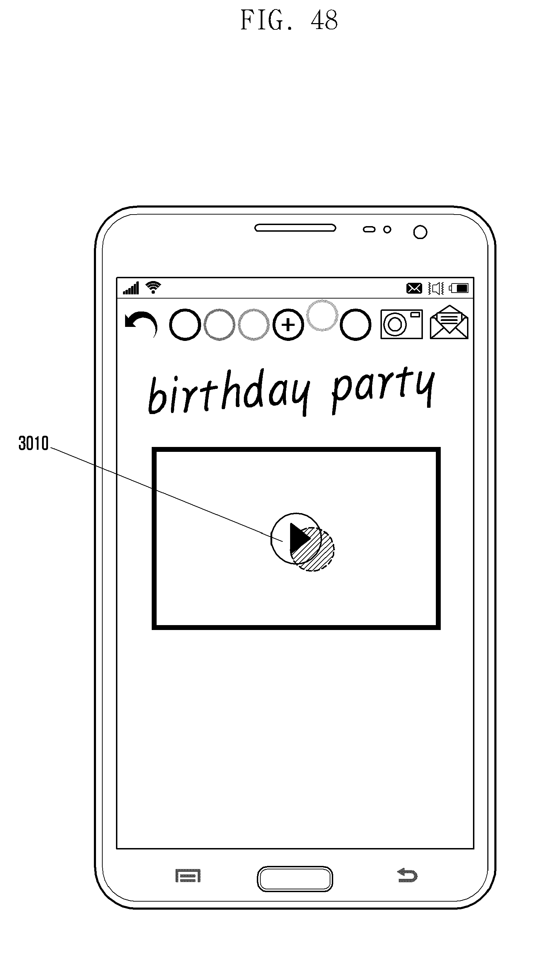

FIG. 47 illustrates a screen display of the electronic device when the user activate the frame area 600 on the onscreen page. In FIG. 47, the user makes a shooting command input, such as a motion picture-taking command, to shoot the motion picture of a subject. Afterwards, the user may make a shooting end command input for terminating the motion picture-taking mode. In response to the shooting end command input, the screen display of the electronic device may be changed as shown in FIG. 48.

FIG. 48 illustrates a screen display of the electronic device when the user inserts the data of the motion picture shot through the frame area 600 on the onscreen page, and when the electronic device 100 shoots the subject (preview image) presented in the frame area 600 to generate the motion picture data and inserts the motion picture data into the onscreen page of the document currently being composed.

As shown in FIG. 48, when the motion picture data is inserted, the electronic device 100 links the inserted data to a player application capable of playing the inserted motion picture data. The electronic device 100 may form a playback screen of the player application with the same position and size as the frame area 600, and presents an indicator 3010 indicating that the motion picture data is playable.

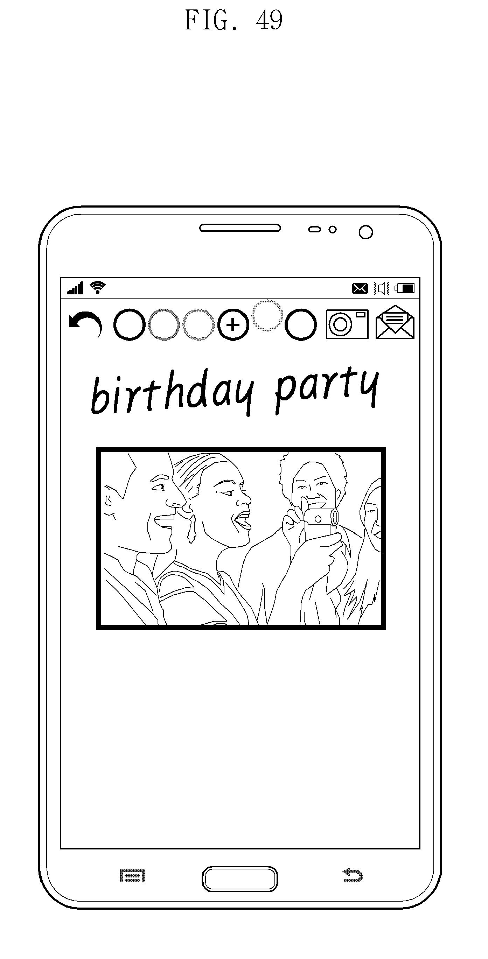

When the motion picture data is inserted on the onscreen page as shown in FIG. 48, the user may select the indicator 3010 to play the motion picture data, as shown in FIG. 49.

FIG. 49 illustrates a screen display of the electronic device 100 when the user makes a playback command input to play the motion picture data inserted on the onscreen page in FIG. 48. The screen display of FIG. 48 changed as shown in FIG. 49 in response to the user's playback command such that the motion picture data is played on the onscreen page. The motion picture may be played in such a manner that the player application capable of playing the motion picture inserted on the page indicates the linked motion as picture data. For example, if the inserted data is in a video format, the data is played by a video player, and if the inserted data is in an audio format, the data is played by an audio player.

According to embodiments of the present invention, each module may be implemented in the form of software, firmware, hardware, or any combination thereof. Some or entire modules may be implemented as one entity responsible for the functions of the corresponding modules.

According to embodiments of the present invention, the individual steps may be performed sequentially, repeatedly, or in parallel. Some steps may be omitted or performed along with other steps. The individual steps may be executed with corresponding modules described in the present invention.

The above-described data processing method, according to embodiments of the present invention can be implemented as computer-executable program commands and stored in a computer-readable storage medium. The computer readable storage medium may store the program commands, data files, and data structures in individual or combined forms. The program commands recorded in the storage medium may be designed and implemented for various embodiments of the present invention or used by those skilled in the computer software field.

The computer-readable storage medium includes magnetic media such as a floppy disk and a magnetic tape, optical media including a Compact Disc (CD) Read- Only Memory (ROM) and a Digital Video Disc (DVD) ROM, a magneto-optical media, and the hardware device designed for storing and executing program commands such as ROM, Random Access Memory (RAM), and flash memory. The program commands include the language code executable by computers using an interpreter as well as the machine language codes created by a compiler. The aforementioned hardware device can be implemented with one or more software modules for executing the various embodiments of the present invention.

Although embodiments of the present invention have been described using specific terms, the specification and drawings are to be regarded in an illustrative rather than a restrictive sense in order to help understand the present invention. It is obvious to those skilled in the art that various modifications and changes can be made thereto without departing from the broader spirit and scope of the present invention.

## Claims

1. A data processing method of an electronic device, the method comprising:
displaying a page configured to receive a user input;
forming an area on the page in response to the user input; and
displaying data in the formed area.

2. The method of claim 1, wherein the data comprises data stored in a memory functionally connected to the electronic device.

3. The method of claim 1, wherein the data comprises data received through a network.

4. The method of claim 1, wherein the user input comprises at least one user gesture.

5. The method of claim 4, wherein forming the area comprises adjusting the area to a specific shape according to the user gesture.

6. The method of claim 1, wherein forming the area comprises acquiring the data in response to a user input.

7. The method of claim 1, wherein displaying the data comprises controlling the data displayed in the formed area in response to the user input.

8. The method of claim 7, wherein controlling the data comprises restricting the user input to the page to at least a portion of the page.

9. The method of claim 7, wherein controlling the data comprises displaying at least one menu corresponding to a function of controlling the data.

10. The method of claim 1, wherein displaying the data comprises displaying the data on the page in response to the user input.

11. The method of claim 1, wherein displaying the data comprises adjusting at least one of a size and position of the area according to the user input.

12. The method of claim 1, wherein displaying the data comprises applying at least one style selected among a plurality of styles and a style input by a user to the area.

13. The method of claim 1, wherein forming the area comprises displaying a plurality of sub-areas including at least a first subarea and a second subarea.

14. The method of claim 13, wherein the data comprises a plurality of data including at least a first data and a second data, and wherein the displaying of the data comprises displaying the first data in the first sub-area and the second data in the second subarea.

15. The method of claim 1, wherein the data comprises a plurality of data including at least a first data and a second data, the first data being received from one of first and second image sensors functionally connected to the electronic device, and the second data being received from another image sensor except the image sensor which received the first data.

16. The method of claim 1, wherein the area comprises a plurality of subareas and, when one of the sub-areas is selected, the data displayed in the selected subarea is stored.

17. An electronic device, comprising:
a page display module configured to display a page for receiving a user input;
a frame area display module configured to display an area on the page in response to the user input;
a data display module configured to display data in the displayed area.

18. The electronic device of claim 17, wherein the data display module is configured to acquire the data in response to the user input.

19. The electronic device of claim 17, wherein the frame area display module is configured to display the area according to a shape of at least one of a dot, line, or diagram detected in response to the user input.

20. A computer-readable storage medium having recorded thereon a program configured to perform the data processing method according to claim 1 when the program is executed by an electronic device.
